(19) Europäisches Patentamt / European Patent Office / Office européen des brevets

(11) **EP 4 435 901 B1**

(12) **EUROPEAN PATENT SPECIFICATION**

(45) Date of publication and mention
of the grant of the patent:
**05.11.2025 Bulletin 2025/45**

(51) International Patent Classification (IPC):
*H01M 4/66* (2006.01)      *H01M 10/052* (2010.01)
*H01M 4/62* (2006.01)      *H01M 4/525* (2010.01)
*H01M 4/36* (2006.01)      H01M 4/02 (2006.01)

(21) Application number: **24155190.2**

(22) Date of filing: **01.02.2024**

(52) Cooperative Patent Classification (CPC):
**H01M 4/366; H01M 4/525; H01M 4/62;**
**H01M 4/625; H01M 4/661; H01M 4/662;**
**H01M 4/667; H01M 10/052;** H01M 2004/028;
Y02E 60/10

(54) **COMPOSITE CATHODE ACTIVE MATERIAL, CATHODE AND LITHIUM BATTERY INCLUDING THE COMPOSITE CATHODE ACTIVE MATERIAL, AND METHOD OF PREPARING THE COMPOSITE CATHODE ACTIVE MATERIAL**

VERBUNDKATHODENAKTIVMATERIAL, KATHODE UND LITHIUMBATTERIE MIT DEM VERBUNDKATHODENAKTIVMATERIAL UND VERFAHREN ZUR HERSTELLUNG DES VERBUNDKATHODENAKTIVMATERIALS

MATÉRIAU ACTIF DE CATHODE COMPOSITE, CATHODE ET BATTERIE AU LITHIUM COMPRENANT LE MATÉRIAU ACTIF DE CATHODE COMPOSITE ET PROCÉDÉ DE PRÉPARATION DU MATÉRIAU ACTIF DE CATHODE COMPOSITE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.03.2023 KR 20230039275**

(43) Date of publication of application:
**25.09.2024 Bulletin 2024/39**

(73) Proprietor: **Samsung SDI Co., Ltd.**
**Yongin-si, Gyeonggi-do 17084 (KR)**

(72) Inventors:
• **SON, Inhyuk**
**17084 Yongin-si (KR)**
• **KAPYLOU, Andrei**
**17084 Yongin-si (KR)**
• **MAH, Sangkook**
**17084 Yongin-si (KR)**
• **JO, Sungnim**
**17084 Yongin-si (KR)**
• **SHIM, Kyueun**
**17084 Yongin-si (KR)**
• **KIM, Soojin**
**17084 Yongin-si (KR)**

(74) Representative: **Marks & Clerk LLP**
**15 Fetter Lane**
**London EC4A 1BW (GB)**

(56) References cited:
EP-A1- 4 131 507      KR-A- 20220 127 002
US-A1- 2022 293 921      US-A1- 2024 170 666

**Description**

**BACKGROUND**

**1. Field**

One or more embodiments of the present disclosure relate to a composite cathode active material, a cathode and a lithium battery that each include the composite cathode active material, and a method of preparing the composite cathode active material.

**2. Description of Related Art**

For miniaturization and high performance of one or more suitable electronic devices, relatively high energy density of lithium batteries is becoming more important in addition to small-size and light-weight characteristics of the lithium batteries. In other words, high-capacity lithium batteries are becoming important.

To implement lithium batteries suitable for the above utilizations, cathode active materials having relatively high capacity are being considered and actively investigated.

Nickel-based cathode active materials of the related art have degraded lifespan characteristics and poor thermal stability due to side reactions.

Therefore, there is a need and desire for a method capable of preventing or reducing deterioration of battery performance while including a nickel-based cathode active material.

EP 4131507 A1 relates to a lithium supplement additive and a preparation method and application thereof.

US 2022/293921 A1 relates to cathode materials, batteries, and methods of forming one or more electrodes for batteries.

KR 20220127002 A relates to a composite positive electrode active material, a positive electrode and a lithium battery using the same, and a manufacturing method thereof

**SUMMARY**

One or more aspects of embodiments of the present disclosure are directed toward a composite cathode active material capable of inhibiting a side reaction of the composite cathode active material and improving reversibility of an electrode reaction, so as to prevent or reduce deterioration of lithium battery performance.

One or more aspects of embodiments of the present disclosure are directed toward a cathode including the composite cathode active material.

One or more aspects of embodiments of the present disclosure are directed toward a lithium battery including the cathode.

One or more aspects of embodiments of the present disclosure are directed toward a method of preparing the composite cathode active material.

Additional aspects will be set forth in part in the description which follows and, in part, will be apparent from the description, or may be learned by practice of the presented embodiments of the disclosure.

According to one or more embodiments of the present invention a composite cathode active material as recited in Claim 1 includes:

a core including a lithium transition metal oxide, and
a shell conformed to a surface of the core,
wherein the shell includes lithium nitrate, $LiNO_3$; and a conductive carbon-based composite, and the conductive carbon-based composite includes a first metal oxide (e.g., at least one first metal oxide) represented by $M_aO_b$, where $0<a\leq3$ and $0<b<4$, and if (e.g., when) a is 1, 2, or 3, b is not an integer; and a carbon-based material,
the first metal oxide is in a matrix of the carbon-based material, and M is at least one metal selected from among Groups 2 to 13, 15, and 16 of the Periodic Table of Elements (e.g. at least one metal selected from Group 13), wherein a metal in the first metal oxide comprises at least one metal selected from among Al, Nb, Mg, Sc, Ti, Zr, V, W, Mn, Fe, Co, Pd, Cu, Ag, Zn, Sb, and Se, and wherein the carbon-based material is graphene.

According to one or more embodiments of the present invention
a cathode as recited in Claim 11 includes the composite cathode active material.

According to one or more embodiments of the present invention
a lithium battery as recited in Claim 12 includes: the cathode; an anode; and an electrolyte between the cathode and the anode.

According to one or more embodiments of the present invention a method of preparing the composite cathode active material as recited in Claim 14 includes:

applying (e.g., providing) a lithium transition metal oxide,
applying (e.g., providing) a composite,
applying (e.g., providing) lithium nitrate, and
mechanically milling the lithium transition metal oxide, the composite, and lithium nitrate,
wherein the composite includes: a first metal oxide (e.g., at least one first metal oxide) represented by $M_aO_b$, where $0 < a \leq 3$, $0 < b < 4$, and if (e.g., when) a is 1, 2, or 3, b is not an integer; and a carbon-based material, and
the first metal oxide is in a matrix of the carbon-based material, and M is at least one metal selected from among Groups 2 to 13, 15, and 16 of the Periodic Table of Elements (e.g. at least one metal selected from Group 13), wherein a metal in the first metal oxide comprises at least one metal selected from among Al, Nb, Mg, Sc, Ti, Zr, V, W, Mn, Fe, Co, Pd, Cu, Ag, Zn, Sb, and Se, and wherein the carbon-based material is graphene.

The invention is defined by the appended claims.

## BRIEF DESCRIPTION OF THE DRAWINGS

The accompanying drawings are included to provide a further understanding of the present disclosure, and is incorporated in and constitutes a part of this specification. The drawings illustrate example embodiments of the present disclosure and, together with the description, serve to explain principles of present disclosure. The above and other aspects, features, and advantages of certain embodiments of the disclosure will be more apparent from the following description taken in conjunction with the accompanying drawings, in which:

FIG. 1 shows C1s X-ray photoelectron spectroscopy (XPS) spectra of composite cathode active materials prepared in Example 3 and Comparative Examples 1 and 2, and bare NCA of Comparative Example 5;
FIG. 2 shows O1s XPS spectra of composite cathode active materials of Example 3 and Comparative Examples 1 and 2, and bare NCA of Comparative Example 5;
FIG. 3 shows Li1s XPS spectra of composite cathode active materials prepared in Example 3 and Comparative Examples 1 and 2, and bare NCA of Comparative Example 5;
FIG. 4 shows Ni2p XPS spectra of composite cathode active materials prepared in Example 3 and Comparative Examples 1 and 2, and bare NCA of Comparative Example 5;
FIG. 5 shows initial specific capacity and initial efficiency characteristics of lithium batteries prepared in Example 6 and Comparative Examples 6, 7, and 10;
FIG. 6 shows capacity retention characteristics of lithium batteries prepared in Example 6 and Comparative Examples 6, 7, and 10;
FIG. 7 is a schematic view of a lithium battery according to one or more embodiments of the present disclosure.
FIG. 8 is a schematic view of a lithium battery according to one or more embodiments of the present disclosure, and
FIG. 9 is a schematic view of a lithium battery according to one or more embodiments of the present disclosure.

## DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," if (e.g., when) preceding a list of elements, modify the entire list of elements and do not modify the individual elements of the list. For example, "at least one of a, b, or c", "at least one selected from among a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

The present disclosure described hereinbelow may have one or more suitable modifications and one or more suitable embodiments, example embodiments will be illustrated in the drawings and more fully described in the detailed description. The present invention however, should not be construed as limited to the example embodiments set forth herein, and rather, should be understood as covering all modifications, equivalents, or alternatives falling within the scope of the appended claims.

The terms utilized herein are for the purpose of describing example embodiments only, and are not intended to be limiting the present disclosure. An expression utilized in the singular encompasses the expression of the plural, unless it has a clearly different meaning in the context. It will be further understood that the terms "comprise(s)/include(s)," "comprising/including," "have/has," and/or "having," if (e.g., when) utilized in the present disclosure, specify the presence of stated features, regions, integers, steps, operations, elements, and/or components, but do not preclude the presence or addition of one or more other features, regions, integers, steps, operations, elements, components, and/or groups thereof. As utilized herein, "/" may be interpreted as "and", or as "or" depending on the context.

In the drawings, thicknesses may be magnified or exaggerated to clearly illustrate one or more suitable layers and regions. Like reference numbers may refer to like elements throughout the drawings and the following description, and duplicative descriptions thereof may not be provided for conciseness. It will be understood that when one element, layer, film, section, sheet, etc. is referred to as being "on" another element, it can be directly on the other element or intervening elements may be present therebetween. On the other hand, if (e.g., when) it is described that an element is "directly on" another element, still another element (e.g., an intervening element) is not interposed therebetween. Although the terms "first," "second," etc. may be utilized herein to describe one or more suitable elements, these elements should not be limited by these terms. These terms are only utilized to distinguish one element from another element.

Hereinafter, according to one or more embodiments of the present disclosure, a composite cathode active material, a cathode and a lithium battery that each include the composite cathode active material, and a method of preparing the composite cathode active material will be further described in more detail.

In one or more embodiments, a composite cathode active material includes: a core including a lithium transition metal oxide; and a shell on (e.g., disposed on) and conformed to a surface of the core, wherein the shell includes lithium nitrate and a conductive carbon-based composite, and the conductive carbon-based composite includes a first metal oxide (e.g., at least one first metal oxide) represented by $M_aO_b$, where $0<a\leq3$, $0<b<4$, and if (e.g., when) a is 1, 2, or 3, and b is not an integer; and a carbon-based material, the first metal oxide is in a matrix of the carbon-based material, and M is at least one metal selected from among Groups 2 to 13, 15, and 16 of the Periodic Table of Elements (e.g. at least one metal selected from Group 13), wherein a metal in the first metal oxide comprises at least one metal selected from among Al, Nb, Mg, Sc, Ti, Zr, V, W, Mn, Fe, Co, Pd, Cu, Ag, Zn, Sb, and Se, and wherein the carbon-based material is graphene.

Hereinafter, a theoretical basis for providing an excellent or suitable effect of the composite cathode active material according to one or more embodiments will be described, but the theoretical basis is to help understanding of the present disclosure and is not intended to limit the present disclosure in any way.

The shell including the conductive carbon-based composite, which includes the first metal oxide and the carbon-based material, and the lithium nitrate may be disposed on a core of the composite cathode active material. The lithium nitrate of the shell may form a chemical bond with the carbon-based material and/or the first metal oxide included in the shell. The lithium nitrate included in the shell may increase the ion conduction of the composite cathode active material.

In one or more embodiments, the shell may further include, in addition to the lithium nitrate, at least one selected from among $LiNO_2$, $Li_3N$, and $LiN_xO_y$ (where $0.5\leq x\leq1$, $2\leq y\leq3.5$, for example, $3\leq y\leq3.5$). The at least one selected from among $LiNO_2$, $Li_3N$, and $LiN_xO_y$ ($0.5\leq x\leq1$, $2\leq y\leq3.5$, for example $3\leq y\leq3.5$) may be formed by decomposition of $LiNO_3$ from physiochemical reactions caused by frictional energy generated during mixing with graphene balls, and if (e.g., when) these ingredients are further included, the ionic conductivity may be consequently improved. As a result, the composite cathode active material having improved high rate characteristics and capacity retention rate and improved specific capacity due to the improved efficiency may be prepared.

In $LiN_xO_y$, a ratio of x to y may be, for example, about 1:2 to about 1:3.

In one or more embodiments, an amount of the lithium nitrate in the shell may be 3 wt% or less, 2 wt% or less, 1 wt% or less, about 0.1 wt% to about 1 wt%, about 0.1 wt% to about 0.5 wt%, or about 0.1 wt% to about 0.3 wt% (e.g. about 0.2 wt% to about 0.3 wt%, or about 0.25 wt% to about 0.3 wt%), based on 100 wt% of the total weight of the composite cathode active material. If (e.g., when) the amount of the lithium nitrate is within the ranges above, the ionic conductivity of the composite cathode active material may be improved without degradation in weight and volume energy density, so that the composite cathode active material having excellent or suitable high rate and lifespan characteristics may be obtained.

In the shell, $LiNO_3$ and at least one ingredient selected from among $LiNO_2$, $Li_3N$, and $LiN_xO_y$ (where $0.5\leq x\leq1$ and $3\leq y\leq3.5$) may be included at a mixing molar ratio of about 10:1 to about 1:1, for example, about 5:1 to about 1:1 or about 3:1 to about 1:1.

Carbon-based materials in the art easily agglomerate, and thus are difficult to be uniformly coated on the core. In one or more embodiments, the composite cathode active material utilizes a composite including a carbon-based material matrix and a plurality of first metal oxides (e.g., in the form of particles) disposed in the matrix, thereby preventing or reducing aggregation of the carbon-based material and uniformly disposing the shell on the core. As a result, by effectively blocking a contact between the core and an electrolyte, side reactions due to the contact therebetween may be prevented or reduced. In one or more embodiments, by suppressing cation mixing through the electrolyte, the generation of a resistive layer may be suppressed or reduced. Also, elution of transition metal ions may be also suppressed or reduced. The carbon-based material is graphene. In these embodiments, the shell including graphene and/or a matrix thereof may have flexibility, and thus a change in volume of the composite cathode active material may be easily accepted and/or adapted during charging and discharging of a lithium battery, and accordingly, occurrence of cracks in the composite cathode active material may be suppressed or reduced. Because graphene has high electronic conductivity, interfacial resistance between the composite cathode active material and the electrolyte may decrease. Therefore, despite the introduction of the shell including graphene, internal resistance of a lithium battery may be maintained or reduced.

In the composite cathode active material according to one or more embodiments, in the shell including the carbon-based material as a main ingredient, for example, a chemical bond between the carbon-based material and the lithium nitrate may facilitate the conduction of electrons and ions. Also, the reversibility of an electrode reaction increases on the surface of the composite cathode active material, and the conductivity of an electrode may also increase. Consequently, the cycle characteristics and charging and discharging capacity of a lithium battery including the composite cathode active material may be improved.

Because the carbon-based material included in the shell of the composite cathode active material is derived from a graphene matrix, the density is relatively low and the porosity is high compared to a carbon-based material derived from a graphite-based material. In one or more embodiments, a d002 interplanar distance of the carbon-based material included in the shell of the composite cathode active material may be, for example, 3.38 angstrom (Å) or more, 3.40 Å or more, 3.45 Å or more, 3.50 Å or more, 3.60 Å or more, 3.80 Å or more, or 4.00 Å or more. In some embodiments, the d002 interplanar distance of the carbon-based material included in the shell of the composite cathode active material may be, for example, in a range of about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. In contrast, the d002 interplanar distance of a carbon-based material derived from a graphite-based material may be, for example, 3.38 Å less or in a range of about 3.35 Å to about 3.38 Å.

Because the first metal oxide has voltage resistance, deterioration of the lithium transition metal oxide included in the core may be prevented or reduced during charging and discharging at a high voltage. For example, in some embodiments, the shell may include one type or kind of the first metal oxide or two or more different types (kinds) of the first metal oxide.

Consequently, the high rate characteristics of a lithium battery including the aforementioned composite cathode active material may be improved, as well as the cycle characteristics at a high temperature and a high voltage.

In one or more embodiments, an amount of the composite may be 3 wt% or less, 2 wt% or less, or 1 wt% or less, based on 100 wt% of the total weight of the composite cathode active material. In some embodiments, the amount of the composite may be, for example, in a range of about 0.01 wt% to about 3 wt%, about 0.1 wt% to about 2 wt%, or about 0.1 wt% to about 1 wt%, based on 100 wt% of the total weight of the composite cathode active material.

In one or more embodiments, in the composite cathode active material, for example, an amount of the shell may be 3 wt% or less, 2 wt% or less, 1 wt% or less, about 0.1 wt% to about 1 wt%, about 0.1 wt% to about 3 wt%, about 0.3 wt% to about 3 wt%, about 0.4 wt% to about 3 wt%, about 0.5 wt% to about 3 wt%, about 0.5 wt% to about 2.5 wt%, about 0.5 wt% to about 2 wt%, or about 0.5 wt% to about 1.5 wt%, based on the total weight of the composite cathode active material. In one or more embodiments, an amount of the first metal oxide may be, for example, in a range of about 0.3 wt% to about 1.8 wt%, about 0.3 wt% to about 1.5 wt%, about 0.3 wt% to about 1.2 wt%, or about 0.3 wt% to about 0.9 wt%, based on the total weight of the composite cathode active material. If (e.g., when) the composite cathode active material includes the shell and the first metal oxide within the ranges above, respectively, the cycle characteristics of a lithium battery including the composite cathode active material may be further improved.

In one or more embodiments, an amount of the first metal (e.g., metals included in the first metal oxide) included in the shell may be, for example, about 1 at% (atomic percentage) to about 10 at%, about 1 at% to about 9 at%, about 2 at% to about 9 at%, about 2 at% to about 8 at%, about 3 at% to about 8 at%, about 3 at% to about 7 at%, about 4 at% to about 7 at%, or about 4 at% to about 6 at%, based on the total number of atoms in the shell. By including the first metal having such an amount range in the shell, the cycle characteristics of a lithium battery including the composite cathode active material may be further improved. The amount of the first metal included in the shell may be obtained from, for example, a peak obtained by measuring an XPS spectrum of the surface of the composite cathode active material.

In one or more embodiments, an amount of oxygen (O) included in the shell may be, for example, about 1 at% to about 20 at%, about 1 at% to about 18 at%, about 3 at% to about 18 at%, about 3 at% to about 16 at%, about 5 at% to about 16 at%, about 5 at% to about 14 at%, about 7 at% to about 14 at%, or about at% 7 to about 12 at%, based on the total number of atoms in the shell. By including the oxygen (O) having such an amount range in the shell, the cycle characteristics of a lithium battery including the composite cathode active material may be further improved. The amount of the oxygen (O) included in the shell may be obtained from, for example, a peak obtained by measuring an XPS spectrum of the surface of the composite cathode active material.

In one or more embodiments, an amount of nitrogen (N) included in the shell may be, for example, about 1 at% to about 12 at%, about 2 at% to about 12 at%, about 2 at% to about 11 at%, about 3 at% to about 11 at%, about 3 at% to about 10 at%, about 4 at% to about 10 at%, about 4 at% to about 9 at%, about 5 at% to about 9 at%, about 5 at% to about 8 at%, or about 5 at% to about 7 at%, based on the total number of atoms in the shell. By including the nitrogen (N) having such an amount range in the shell, the cycle characteristics of a lithium battery including the composite cathode active material may be further improved. The amount of the nitrogen (N) included in the shell may be obtained from, for example, a peak obtained by measuring an XPS spectrum of the surface of the composite cathode active material.

In one or more embodiments, an amount of the carbon included in the shell may be, for example, about 65 at% to about 99 at%, about 70 at% to about 99 at%, about 75 at% to about 99 at%, about 80 at% to about 99 at%, about 80 at% to about 95 at%, about 80 at% to about 93 at%, about 80 at% to about 91 at%, or about 83 at% to about 90 at%, based on the total number of atoms in the shell. By including the carbon having such an amount range in the shell, the cycle characteristics of a lithium battery including the composite cathode active material may be further improved. The amount of the carbon included in the shell may be obtained from, for example, a peak obtained by measuring an XPS spectrum of the surface of the composite cathode active material.

A metal included in the first metal oxide is at least one selected from among Al, Nb, Mg, Sc, Ti, Zr, V, W, Mn, Fe, Co, Pd, Cu, Ag, Zn, Sb, and Se. The first metal oxide may be, for example, at least one selected from among $Al_2O_z$ (where 0<z<3), $NbO_x$ (where 0<x<2.5), $MgO_x$ (where 0<x<1), $Sc_2O_z$ (where 0<z<3), $TiO_y$ (where 0<y<2), $ZrO_y$ (where 0<y<2), $V_2O_z$ (where 0<z<3), $WO_y$ (where 0<y<2), $MnO_y$ (where 0<y<2), $Fe_2O_z$ (where 0<z<3), $Co_3O_w$ (where 0<w<4), $PdO_x$ (where 0<x<1), $CuO_x$ (where 0<x<1), $AgO_x$ (where 0<x<1), $ZnO_x$ (where 0<x<1), $Sb_2O_z$ (where 0<z<3), and $SeO_y$ (where 0<y<2). By disposing the first metal oxide in a matrix of the carbon-based material, the uniformity of the shell on the core may be improved, and the voltage resistance of the composite cathode active material may be further improved. For example, in some embodiments, the shell may include, as the first metal oxide, $Al_2O_x$ (where 0<x<3).

In one or more embodiments, the shell may further include a second metal oxide (e.g., at least one second metal oxide) represented by $M_aO_c$ (where $0<a\leq3$ and $0<c\leq4$, and if (e.g., when) a is 1, 2, or 3, c is an integer). Here, M may be at least one metal selected from among Groups 2 to 13, 15, and 16 of the Periodic Table of Elements (e.g. at least one metal selected from Group 13). For example, in one or more embodiments, the second metal oxide may include the same metal as the first metal oxide, and a ratio of c to a (c/a) of the second metal oxide may be greater than a ratio of b to a (b/a) of the first metal oxide. For example, c/a >b/a. The second metal oxide may be selected from among $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be a reduction product of the second metal oxide. The first metal oxide may be obtained by partial or full reduction of the second metal oxide. Accordingly, the first metal oxide may have a lower oxygen amount and a lower metal oxidation number than the second metal oxide. For example, in some embodiments, the shell may include $Al_2O_x$ (where 0<x<3) as the first metal oxide and $Al_2O_3$ as the second metal oxide.

In the composite cathode active material, for example, the carbon-based material included in the shell and a transition metal of the lithium transition metal oxide included in the core are chemically bound through a chemical bond. The carbon atom (C) of the carbon-based material included in the shell and the transition metal (Me) of the lithium transition metal oxide may be, for example, chemically bound through an oxygen atom-mediated C-O-Me bond (e.g., a C-O-Ni bond or a C-O-Co bond). The core and the shell may form a composite through chemical binding between the carbon-based material included in the shell and the lithium transition metal oxide included in the core. In this regard, such a composite may be distinguished from a simple physical mixture of the carbon-based material and the lithium transition metal oxide.

In one or more embodiments, the first metal oxide and the carbon-based material included in the shell may be also chemically bound through a chemical bond. Here, the chemical bond may be, for example, a covalent bond or an ionic bond. The covalent bond may be, for example, a bond including at least one of an ester group, an ether group, a carbonyl group, an amide group, a carbonate anhydride group, or an acid anhydride group. The ionic bond may be, for example, a bond including a carboxylic acid ion, an ammonium ion, an acyl cation group, and/or the like.

In one or more embodiments, a thickness of the shell may be, for example, in a range of 1 nm to 5 $\mu$m, 1 nm to 1 $\mu$m, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, or 1 nm to 20 nm. When the thickness of the shell is within the ranges above, the electronic conductivity of an electrode including the composite cathode active material may be improved.

In one or more embodiments, the composite cathode active material may further include, for example, a third metal doped on the core and/or a third metal oxide coated on the core. Then, the shell may be disposed on the third metal doped on the core, or the third metal oxide coated on the core. For example, after the third metal is doped on the surface of the lithium transition metal oxide included in the core or the third metal oxide is coated on the surface of the lithium transition metal oxide included in the core, the shell may be disposed on the third metal and/or the third metal oxide. For example, the composite cathode active material may include: the core; an interlayer on (e.g., disposed on) the core; and the shell on (e.g., disposed on) the interlayer, wherein the interlayer may include the third metal and/or the third metal oxide. The third metal may be at least one metal selected from among Al, Zr, W, and Co, and the third metal oxide may be $Al_2O_3$, $Li_2O$-$ZrO_2$, $WO_2$, CoO, $Co_2O_3$, $Co_3O_4$, and/or the like.

In one or more embodiments, the shell included in the composite cathode active material may include, for example, lithium nitrate and at least one selected from among the conductive carbon-based composite, and a milling result of the composite. The conductive carbon-based composite includes a first metal oxide and a carbon-based material (graphene), and the first metal oxide may be in a matrix of the carbon-based material (a graphene matrix). In some embodiments, the shell may be, for example, prepared by utilizing the composite including the first metal oxide, and the carbon-based material (graphene), and the lithium nitrate. In some embodiments, the composite may further include a second metal oxide, in addition to the first metal oxide. In some embodiments, the composite may include, for example, at least two types (kinds) of the first metal oxide. In some embodiments, the composite may include, for example, at least two types (kinds) of the first metal oxide and at least two types (kinds) of the second metal oxide.

In one or more embodiments, an amount of at least one of the conductive carbon-based composite and the milling product thereof included in the composite cathode active material may be 3 wt% or less, 2 wt% or less, 1 wt% or less, 0.5 wt% or less, or 0.2 wt% or less, based on the total weight of the composite cathode active material. In some embodiments, the amount of at least one of the conductive carbon-based composite and the milling product thereof may be in a range of about 0.01 wt% to about 3 wt%, about 0.01 wt% to about 1 wt%, about 0.01 wt% to about 0.7 wt%, about 0.01 wt% to about 0.5 wt%, about 0.01 wt% to about 0.2 wt%, about 0.01 wt% to about 0.1 wt%, or about 0.03 wt% to about 0.07 wt%, based on the total weight of the composite cathode active material. If (e.g., when) the composite cathode active material includes at least one of the conductive carbon-based composite and the milling product thereof within the amount ranges above, the cycle characteristics of a lithium battery including the composite cathode active material may be further improved.

In one or more embodiments, an average particle diameter (e.g. D50) of at least one selected from among the first metal oxide and the second metal oxide included in the composite may be in a range of about 1 nm to about 1 $\mu$m, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, about 7 nm to about 20 nm, or about 7 nm to about 15 nm. Because the first metal oxide and/or the second metal oxide has the particle diameter within the nanometer ranges above, the first metal oxide and/or the second metal oxide may be more uniformly distributed in a matrix of the carbon-based material of the composite. Accordingly, the composite may be then uniformly coated on the core without agglomeration to form a shell. Also, if (e.g., when) the particle diameter of first metal oxide and/or the second metal oxide is within the ranges above, the first metal oxide and/or the second metal oxide may be more uniformly disposed on the core. Therefore, by uniformly disposing the first metal oxide and/or the second metal oxide on the core, the voltage resistance characteristics of a lithium battery including the composite may be more effectively exhibited.

The average particle diameter of each of the first metal oxide and the second metal oxide may be measured by, for example, a measurement apparatus utilizing a laser diffraction method or a dynamic light scattering method. The average particle diameter may be measured by utilizing, for example, a laser scattering particle size distribution meter (e.g., LA-920 of Horiba Ltd.), and is a value of the median particle diameter (D50) when the metal oxide particles are accumulated to 50 % from small particles to large particles in volume conversion.

In one or more embodiments, the uniformity deviation of at least one selected from among the first metal oxide and the second metal oxide included in the composite may be less than or equal to 3 %, less than or equal to 2 %, or less than or equal to 1 %. The uniformity may be obtained by, for example, XPS. Accordingly, at least one selected from among the first metal oxide and the second metal oxide may be uniformly distributed in the composite with the deviation of less than or equal to 3 %, less than or equal to 2 %, or less than or equal to 1 %.

In one or more embodiments, the carbon-based material included in the composite may have, for example, a branched structure, and at least one selected from among the first metal oxide and the second metal oxide may be distributed in the branched structure of the carbon-based material. The branched structure of the carbon-based material may include, for example, a plurality of carbon-based material particles that contact each other. If (e.g., when) the carbon-based material has such a branched structure, one or more suitable conducting paths may be provided.

The graphene may have, for example, a branched structure, and at least one metal oxide selected from among the first metal oxide and the second metal oxide may be distributed in the branched structure of the graphene. The branched structure of the graphene may include, for example, a plurality of graphene particles that contact each other. Because the graphene has such a branched structure, one or more suitable conducting paths may be provided.

In one or more embodiments, the carbon-based material included in the composite may have, for example, a spherical structure (e.g., a substantially spherical structure), and at least one metal oxide selected from among the first metal oxide and the second metal oxide may be distributed in the spherical structure. The spherical structure of the carbon-based material may have a size in a range of 50 nm to 300 nm. A plurality of the carbon-based material having the spherical structure may be provided. If (e.g., when) the carbon-based material has such a spherical structure, the composite may have a rigid structure.

The graphene may have, for example, a spherical structure (e.g., a substantially spherical structure), and at least one metal oxide selected from among the first metal oxide and the second metal oxide may be distributed in the spherical structure. The spherical structure of the graphene may have a size in a range of 50 nm to 300 nm. A plurality of graphenes having the spherical structure may be provided. If (e.g., when) the graphene has such a spherical structure, the composite may have a rigid structure.

In one or more embodiments, the carbon-based material included in the composite may have, for example, a spiral structure in which a plurality of spherical structures (e.g., substantially spherical structures) are connected to each other, and at least one metal oxide selected from among the first metal oxide and the second metal oxide may be distributed in the spherical structures of the spiral structure. The spiral structure of the carbon-based material may have a size in a range of 500 nm to 100 $\mu$m. If (e.g., when) the carbon-based material has such a spiral structure, the composite may have a rigid structure.

The graphene may have, for example, a spiral structure in which a plurality of spherical structures (e.g., substantially spherical structures) are connected, and at least one metal oxide selected from among the first metal oxide and the second metal oxide may be distributed in the spherical structures of the spiral structure. The spiral structure of the graphene may have a size in a range of 500 nm to 100 $\mu$m. Because the graphene has such a spiral structure, the composite may have a rigid structure.

In one or more embodiments, the carbon-based material included in the composite may have, for example, a cluster structure in which a plurality of spherical structures (e.g., substantially spherical structures) are aggregated with each other, and at least one metal oxide selected from among the first metal oxide and the second metal oxide may be distributed in the spherical structures of the cluster structure. The cluster structure of the carbon-based material may have a size in a range of 0.5 mm to 10 mm. If (e.g., when) the carbon-based material has such a cluster structure, the composite may have a rigid structure.

The graphene may have, for example, a cluster structure in which a plurality of spherical structures (e.g., substantially spherical structures) are aggregated, and at least one metal oxide selected from among the first metal oxide and the second metal oxide may be distributed in the spherical structure of the cluster structure. The cluster structure of the graphene may have a size in a range of 0.5 mm to 10 mm. Because the graphene has such a cluster structure, the composite may have a rigid structure.

In one or more embodiments, the composite may have, for example, a crumpled faceted-ball structure, and at least one selected from among the first metal oxide and the second metal oxide may be distributed inside or on the surface of the crumpled faceted-ball structure. Because the composite has such a faceted-ball structure, the composite may be easily coated on the irregular surface (e.g., having unevenness) of the core.

In one or more embodiments, the composite may have, for example, a planar structure, and at least one selected from among the first metal oxide and the second metal oxide may be distributed inside or on the surface of the planar structure. Because the composite has such a two-dimensional planar structure, the composite may be easily coated on the irregular surface (e.g., having unevenness) of the core.

The carbon-based material included in the composite may extend from the first metal oxide by a distance of less than or equal to about 10 nm, and may include at least 1 to 20 carbon-based material layers. For example, in some embodiments, if (e.g., when) a plurality of carbon-based material layers are laminated, a carbon-based material having a total thickness of less than or equal to about 12 nm may be disposed on the first metal oxide. For example, in some embodiments, the total thickness of the carbon-based material may be in a range of 0.6 nm to 12 nm.

The graphene may extend from the first metal oxide by a distance of less than or equal to about 10 nm, and may include at least 1 to 20 graphene layers. For example, if (e.g., when) a plurality of graphene layers are laminated, graphene having a total thickness of less than or equal to about 12 nm may be disposed on the first metal oxide. For example, in some embodiments, the total thickness of graphene may be in a range of 0.6 nm to 12 nm.

The core included in the composite cathode active material may include, for example, a lithium transition metal oxide represented by Formula 1:

$$\text{Formula 1} \qquad Li_aNi_xCo_yM_zO_{2-b}A_b,$$

wherein, in Formula 1,
$1.0 \leq a \leq 1.2$, $0 \leq b \leq 0.2$, $0.8 \leq x < 1$, $0 < y \leq 0.3$, $0 < z \leq 0.3$, and $x+y+z=1$, M may be manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), or a combination thereof, and
A may be fluorine (F), sulfur (S), chlorine (Cl), bromine (Br), or a combination thereof.

In Formula 1, values may satisfy $1.0 \leq a \leq 1.2$, $0.8 \leq x \leq 0.95$, $0 \leq y \leq 0.2$, $0 < z \leq 0.2$, and $x+y+z=1$,

In some embodiments, the core included in the composite cathode active material may include, for example, at least one selected from among lithium transition metal oxides represented by Formulae 2 to 4:

$$\text{Formula 2} \qquad LiNi_xCo_yMn_zO_2$$

$$\text{Formula 3} \qquad LiNi_xCo_yAl_zO_2,$$

wherein, in Formulae 2 and 3, $0.8 \leq x \leq 0.95$, $0 < y \leq 0.2$, $0 < z \leq 0.2$, and $x+y+z=1$,

$$\text{Formula 4} \qquad LiNi_xCo_yMn_vAl_wO_2,$$

wherein, in Formula 4, $0.8 \leq x \leq 0.95$, $0 < y \leq 0.2$, $0 < v \leq 0.2$, $0 < w \leq 0.2$, and $x+y+v+w=1$.

The lithium transition metal oxides represented by Formulae 1 to 4 may have a high nickel amount of 80 mol% or more, 85 mol% or more, or 90 mol% or more, based on the total number of moles of the transition metals included in the lithium transition metal oxides, and may provide excellent or suitable initial capacity and lifespan characteristics at room temperature and a high temperature. For example, in one or more embodiments, the amount of nickel in the lithium transition metal oxides represented by Formulae 1 to 4 may be in a range of about 80 mol% to about 95 mol%, about 85 mol% to about 95 mol%, or about 90 mol% to about 95 mol%, based on the total number of moles of the transition metals included in the lithium transition metal oxide.

In one or more embodiments, the core included in the composite cathode active material may include, for example, a lithium transition metal oxide represented by one of Formulae 5 and 6:

Formula 5 $\qquad Li_aCo_xM_yO_{2-b}A_b$,

wherein, in Formula 5,
$1.0 \leq a \leq 1.2$, $0 \leq b \leq 0.2$, $0.9 \leq x \leq 1$, $0 \leq y \leq 0.1$, and $x+y=1$,
M may be Mn, Nb, V, Mg, Ga, Si, W, Mo, Fe, Cr, Cu, Zn, Ti, Al, or a combination thereof, and A may be F, S, Cl, Br, or a combination thereof,

Formula 6 $\qquad LiCoO_2$.

One or more aspects of embodiments of the present disclosure are directed toward a cathode including the composite cathode active material. By including the composite cathode active material, the cathode may provide improved cycle characteristics and increased electrical conductivity.

The cathode may be, for example, prepared according to the following method, but the preparation method is not necessarily limited thereto and may be adjusted to required conditions.

First, a cathode active material composition may be prepared by mixing the aforementioned composite cathode active material, a conductive material, a binder, and a solvent. The prepared cathode active material composition may be directly coated and dried on a cathode current collector to form a cathode electrode plate on which a cathode active material layer is formed. In some embodiments, a film obtained by casting the cathode active material composition on a separate support and separating it from the support may be laminated on a cathode current collector to prepare a cathode electrode plate on which a cathode active material layer is formed.

Examples of the conductive material may be: Denka black, carbon black, graphite particulates, natural graphite, artificial graphite, acetylene black, Ketjen black, carbon fibers; carbon nanotubes; metallic powder, metallic fiber, or metallic tube of copper, nickel, aluminium, silver, and/or the like; and/or a conductive polymer such as a polyphenylene derivative. However, embodiments of the present disclosure are not limited thereto, and any suitable conductive material available in the art may be utilized.

Examples of the binder may be a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, a styrene butadiene-rubber polymer, and/or the like, and examples of the solvent may be N-methyl pyrrolidone (NMP), acetone, water, and/or the like. However, embodiments of the present disclosure are not limited thereto, and any suitable binder and solvent available in the art may be utilized.

In some embodiments, by further adding a plasticizer or a pore former to the cathode active material composition, pores may be formed inside an electrode plate.

The amounts of the composite cathode active material, the conductive material, the binder, and the solvent utilized in the cathode may be at levels general for utilization in a lithium battery. Depending on the utilization and configuration of a lithium battery, in some embodiments, one or more selected from among the conductive material, the binder, and the solvent may not be provided.

In one or more embodiments, an amount of the binder included in the cathode may be in a range of about 0.1 wt% to about 10 wt% or about 0.1 wt% to about 5 wt%, based on the total weight of the cathode active material layer. An amount of the composite cathode active material included in the cathode may be in a range of about 90 wt% to about 99 wt% or about 95 wt% to about 99 wt%, based on the total weight of the cathode active material layer.

In some embodiments, the cathode may additionally include a cathode active material other than the aforementioned composite cathode active material.

As the cathode active material other than the aforementioned composite cathode active material, any suitable lithium-containing metal oxide available in the art may be utilized without limitation. For example, at least one composite oxide of lithium and a metal selected from among Co, Mn, Ni, and a combination thereof may be utilized, and a non-limiting example thereof may be a compound represented by one of the following formulae: $Li_aA_{1-b}B'_bD_2$ (where $0.90 \leq a \leq 1$ and $0 \leq b \leq 0.5$); $Li_aE_{1-b}B'_bO_{2-c}D_c$ (where $0.90 \leq a \leq 1$, $0 \leq b \leq 0.5$, and $0 \leq c \leq 0.05$); $LiE_{2-b}B'_bO_{4-c}D_c$ (where $0 \leq b \leq 0.5$ and $0 \leq c \leq 0.05$); $Li_aNi_{1-b-c}Co_bB'_cD_\alpha$ (where $0.90 \leq a \leq 1$, $0 \leq b \leq 0.5$, $0 \leq c \leq 0.05$, and $0 < \alpha \leq 2$); $Li_aNi_{1-b-c}CO_bB'_cO_{2-\alpha}F'_\alpha$ (where $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-\alpha}F'_2$ (where $0.90 \leq a \leq 1$, $0 \leq b \leq 0.5$, $0 \leq c \leq 0.05$, and $0 < \alpha < 2$); $Li_aNi_{1-b-c}Mn_bB'_cD_\alpha$ (where $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_\alpha$ (where $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where $0.90 \leq a \leq 1$, $0 \leq b \leq 0.5$, $0 \leq c \leq 0.05$, and $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above representing the compound, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

In some embodiments, a compound in which a coating layer is additionally provided on the surface of the aforementioned compound may be also utilized, and a mixture of the aforementioned compound and a compound additionally provided with a coating layer may be also utilized. The coating layer additionally provided on the surface of the aforementioned compound may include, for example, a coating element compound such as an oxide of a coating element, a hydroxide of a coating element, an oxyhydroxide of a coating element, an oxycarbonate of a coating element, and/or a hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the positive electrode active material. The coating method may be, for example, spray coating, dipping method, and/or the like. A detailed description of the coating method will not be provided herein because it should be well understood by those in the art.

The cathode current collector may be, for example, in the form of a plate or a foil, each including (e.g., consisting of) In, Cu, Mg, stainless steel, Ti, Fe, Co, Ni, Zn, Al, Ge, Li, or an alloy thereof. In some embodiments, the cathode current collector may not be provided. The thickness of the cathode current collector may be, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

In one or more embodiments, the cathode current collector may include, for example, a base film and a metal layer disposed on one side or both (e.g., opposite) sides of the base film. The base film may include, for example, a polymer. The polymer may be, for example, a thermoplastic polymer. The polymer may be, for example, polyethyleneterephtalate (PET), polyethylene (PE), polypropylene (PP), polybutyleneterephthalate (PBT), polyimide (PI), or any combination thereof. In some embodiments, the polymer may be an insulator. Because the base film includes an insulating thermoplastic polymer, the base film may be softened or liquefied to block or reduce the operation of a lithium battery in the case of occurrence of a short circuit, so that a rapid current increase may be inhibited. The metal layer may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li) or any alloy thereof. The metal layer acts as an electrochemical fuse and is cut by an overcurrent, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector decrease, so that stability of the lithium battery may be improved in the case of a short circuit. In one or more embodiments, a lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. In some embodiments, a metal chip may further be added between the metal layer and the lead tab for stronger welding between the metal layer and the lead tab. The metal chip may be a chip of the same material as the metal of the metal layer. The metal chip may be, for example, metal foil and/or metal mesh. The metal chip may be, for example, aluminium foil, copper foil, and/or stainless steel (SUS) foil. By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. In some embodiments, a metal chip and/or a lead tab may further be added to the metal layer. In one or more embodiments, the base film may have a thickness of, for example, 1 $\mu$m to 50 $\mu$m, 1.5 $\mu$m to 50 $\mu$m, 1.5 $\mu$m to 40 $\mu$m, or 1.5 to 30 $\mu$m. With the thickness of the base film within the above-described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the above-described ranges, the base film melts during a process of welding the lead tab to be easily bound to the lead tab. In some embodiments, to improve adhesion between the base film and the metal layer, surface treatment such as corona treatment may be performed on the base film. In one or more embodiments, a thickness of the metal layer may be, for example, from 0.01 $\mu$m to 3 $\mu$m, from 0.1 $\mu$m to 3 $\mu$m, from 0.1 $\mu$m to 2 $\mu$m, or from 0.1 $\mu$m to 1 $\mu$m. With the thickness of the metal layer within the above-described ranges, stability of the electrode assembly may be obtained while maintaining conductivity thereof. In some embodiments, a thickness of the metal chip may be, for example, from 2 $\mu$m to 10 $\mu$m, from 2 $\mu$m to 7 $\mu$m, or from 4 $\mu$m to 6 $\mu$m. With the thickness of the metal chip within the above-described ranges, the metal layer may be more easily connected to the lead tab. Because the cathode current collector has the above-described structure, the weight of the cathode may be reduced, so that energy density of the cathode and the lithium battery may be increased.

One or more aspects of embodiments of the present disclosure are directed toward a lithium battery including the cathode that includes the composite cathode active material.

If (e.g., when) the lithium battery includes the cathode including the composite cathode active material, the improved cycle characteristics and improved thermal stability of the lithium battery may be provided.

The lithium battery may be, for example, prepared according to the following method, but the preparation method thereof is not necessarily limited to the exemplified method and may be adjusted to required conditions.

First, a cathode may be prepared according to the aforementioned preparation method of the cathode.

Next, a negative electrode (i.e., an anode) may be prepared as follows. The anode may be, for example, prepared in substantially the same manner as the cathode, except that an anode active material is utilized instead of the composite cathode active material. Also, in an anode active material composition, the substantially same conductive material, binder, and solvent utilized in the cathode preparation may be utilized.

For example, an anode active material composition may be prepared by mixing an anode active material, a conductive material, a binder, and a solvent, and then may be directly coated on an anode current collector to prepare an anode electrode plate including an anode active material layer. In some embodiments, an anode active material film obtained by casting the anode active material composition on a separate support and then separating it from the support may be laminated on a copper current collector to prepare an anode electrode plate.

As the anode active material, any suitable anode active material available in the art for a lithium battery may be utilized. For example, in one or more embodiments, the anode active material may include at least one selected from among lithium metal, a metal alloyable with lithium, a transition metal oxide, a non-transition metal oxide, and a carbon-based material.

Non-limiting examples of the metal alloyable with lithium may be silicon (Si), tin (Sn), aluminium (Al), germanium (Ge), lead (Pb), bismuth (Bi), antimony (Sb), a Si-X alloy (where X is an alkali metal, an alkaline earth metal, a Group 13 element, a Group 14 element, a transition metal, a rare earth element, or a combination thereof, and X is not Si), and a Sn-X alloy (wherein X is an alkali metal, an alkaline earth-metal, a Group 13 element, a Group 14 element, a transition metal, a rare earth element, or a combination thereof, and X is not Sn). The element X may be, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or a combination thereof (e.g. magnesium (Mg), calcium (Ca), strontium (Sr), barium (Ba), scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), rhenium (Re), iron (Fe), lead (Pb), ruthenium (Ru), osmium (Os), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), or a combination thereof).

The transition metal oxide may include, for example, a lithium titanium oxide, a vanadium oxide, a lithium vanadium oxide, and/or the like.

The non-transition metal oxide may be, for example, $SnO_2$, $SiO_x$ (where 0<x<2), and/or the like.

The carbon-based material may be, for example, crystalline carbon, amorphous carbon, or a mixture thereof. The crystalline carbon may be, for example, amorphous, plate-like, flake-like, spherical (e.g., substantially spherical), or fibrous graphite, such as natural graphite or artificial graphite. The amorphous carbon may be, for example, soft carbon (carbon sintered at a low temperature) or hard carbon, mesophase pitch carbide, sintered coke, and/or the like.

The amounts of the anode active material, the conductive material, the binder, and the solvent may be at levels general for utilize in a lithium battery. Depending on the utilize and configuration of a lithium battery, in some embodiments, one or more selected from among the conductive material, the binder, and the solvent may not be provided.

In one or more embodiments, an amount of the binder included in the anode may be in a range of about 0.1 wt% to about 10 wt% or about 0.1 wt% to about 5 wt%, based on the total weight of the anode active material layer. An amount of the conductive material included in the anode may be in a range of about 0.1 wt% to about 10 wt% or about 0.1 wt% to about 5 wt%, based on the total weight of the anode active material layer. An amount of the anode active material included in the anode may be in a range of about 90 wt% to about 99 wt% or about 95 wt% to about 99 wt%, based on the total weight of the anode active material layer. If (e.g., when) the anode active material is lithium metal, the anode may not include (e.g., may exclude) a binder and a conductive material.

The anode current collector may be, for example, formed of a material that does not react with lithium, for example, a material that forms neither an alloy nor a compound with lithium. A material for forming the negative electrode current collector may be, for example, Cu, stainless steel, Ti, Fe, Co, Ni, and/or the like, but embodiments of the present disclosure are not limited thereto. Any material available as an electrode current collector in the art may be utilized. The negative electrode (i.e., anode) current collector may be formed of one of the aforementioned metals, an alloy of two or more of the aforementioned metals, or a coating material. The negative electrode current collector may be, for example, in the form of a plate or foil.

In one or more embodiments, the anode current collector may include, for example, a base film and a metal layer disposed on one side or both (e.g., opposite) sides of the base film. The base film may include, for example, a polymer. The polymer may be, for example, a thermoplastic polymer. The polymer may be, for example, polyethyleneterephtalate (PET), polyethylene (PE), polypropylene (PP), polybutyleneterephthalate (PBT), polyimide (PI), or any combination thereof. In some embodiments, the polymer may be an insulating polymer. Because the base film includes an insulating thermoplastic polymer, the base film may be softened or liquefied to block or reduce the operation of a battery in the case of occurrence of a short circuit, so that a rapid current increase may be inhibited. The metal layer may include, for example, copper (Cu), stainless steel, titanium (Ti), iron (Fe), cobalt (Co), nickel (Ni), or an alloy thereof. The metal layer may correspond to, for example, a first metal substrate. In some embodiments, the metal layer may further include a coating layer including a second metal. In some embodiments, the anode current collector may further include a metal chip and/or a lead tab. For more detailed descriptions of the base film, the metal layer, the metal chip, and the lead tab of the anode current collector, reference may be made to the detailed description of the cathode current collector. Because the anode current collector has the above-described structure, the weight of the anode may be reduced, and accordingly, energy density of the anode and the lithium battery may be increased.

Next, a separator to be disposed between the positive electrode and the negative electrode may be prepared.

The separator may be any suitable separator commonly utilized in a lithium battery. The separator may have, for example, low resistance to migration of ions in an electrolyte and have electrolyte solution-retaining ability. In one or more embodiments, the separator may be, for example, glass fiber, polyester, Teflon, PE, PP, PTFE, or a combination thereof, each of which may be in a non-woven fabric form or a woven fabric form. For a lithium-ion battery, a rollable separator including, for example, PE or PP may be utilized. A separator with a good or suitable organic electrolyte solution-retaining ability may be utilized for a lithium-ion polymer battery.

The separator may be, for example, prepared according to the following example method, but embodiments of the present disclosure are not limited thereto, and the method may be controlled or selected according to the required conditions.

First, a separator composition may be prepared by mixing a polymer resin, a filler, and a solvent. Then, the separator composition may be directly coated and dried on an electrode to form a separator. In some embodiments, a separator film obtained by casting the separator composition on a support, drying, and separating it from the support may be laminated on an electrode to form a separator.

The polymer utilized in the separator preparation is not particularly limited, and any suitable polymer available as a binder for an electrode plate may be utilized. For example, in some embodiments, a vinylidenefluoride/hexafluoropropylene copolymer, polyvinylidene fluoride (PVDF), polyacrylonitrile, polymethylmethacrylate, or a mixture thereof may be utilized.

Next, an electrolyte may be prepared.

The electrolyte may be, for example, an organic electrolyte solution. The organic electrolyte solution may be, for example, prepared by dissolving a lithium salt in an organic solvent.

For utilization as the organic solvent, any suitable organic solvent available in the art may be utilized. Non-limiting examples of the organic solvent may be propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, $\gamma$-butyrolactone, dioxolane, 4-methyl dioxolane, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

For utilization as the lithium salt, any material available in the art as a lithium salt may be utilized. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y may each be a natural number of 1 to 20), LiCl, Lil, or a mixture thereof.

In one or more embodiments, the electrolyte may be a solid electrolyte. The solid electrolyte may be, for example, boron oxide, lithium oxynitride, and/or the like, but embodiments of the present disclosure are not limited thereto. Any suitable solid electrolyte available in the art may be utilized. The solid electrolyte may be formed on the anode by a method such as sputtering, or a separate solid electrolyte sheet may be laminated on the anode.

The solid electrolyte may be, for example, an oxide-based solid electrolyte, a sulfide-based solid electrolyte, or a polymer solid electrolyte (e.g., including a gel electrolyte).

In some embodiments, the solid electrolyte may be, for example, an oxide-based solid electrolyte. The oxide-based solid electrolyte may include at least one selected from among $Li_{1+x+y}Al_xTi_{2-x}Si_yP_{3-y}O_{12}$ (where $0<x<2$ and $0\leq y<3$), $BaTiO_3$, $Pb(Zr,Ti)O_3$(PZT), $Pb_{1-x}La_xZr_{1-y}Ti_yO_3$(PLZT)(where $0\leq x<1$ and $0\leq y<1$), $Pb(Mg_{3}Nb_{2/3})O_3$-$PbTiO_3$(PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (where $0<x<2$ and $0<y<3$), $Li_xAl_yTi_z(PO_4)_3$ (where $0<x<2$, $0<y<1$, and $0<z<3$), $Li_{1+x+y}(Al, Ga)_x(Ti, Ge)_{2-x}Si_yP_{3-y}O_{12}$ (where $0\leq x\leq 1$ and $0\leq y\leq 1$), $Li_xLa_yTiO_3$ (where $0<x<2$ and $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (where M may be Te, Nb, or Zr, and x may be an integer from 1 to 10). The solid electrolyte may be prepared by a sintering method and/or the like. For example, in some embodiments, the oxide-based solid electrolyte may include a garnet-type or kind solid electrolyte selected from among $Li_7La_3Zr_2O_{12}$(LLZO) and $Li_{3+x}La_3Zr_{2-a}M_aO_{12}$ (M-doped LLZO)(where M may be Ga, W, Nb, Ta, or Al, x may be an integer from 1 to 10, and $0<a<2$).

The sulfide-based solid electrolyte may include, for example, lithium sulfide, silicon sulfide, phosphorus sulfide, boron sulfide, or a combination thereof. In some embodiments, particles of the sulfide-based solid electrolyte may include $Li_2S$, $P_2S_5$, $SiS_2$, $GeS_2$, $B_2S_3$, or a combination thereof. In some embodiments, the particles of the sulfide-based solid electrolyte may include $Li_2S$ or $P_2S_5$. The particles of the sulfide-based solid electrolyte are suitable to have higher lithium ionic conductivity than other inorganic compounds. For example, in some embodiments, the sulfide-based solid electrolyte may include $Li_2S$ and $P_2S_5$. If (e.g., when) the sulfide solid electrolyte material constituting the sulfide-based solid electrolyte includes $Li_2S$-$P_2S_5$, a mixing molar ratio of $Li_2S$ to $P_2S_5$ may be, for example, in a range of about 50:50 to about 90:10. In some embodiments, an inorganic solid electrolyte prepared by adding $Li_3PO_4$, halogen, a halogen compound, $Li_{2+2x}Zn_{1-x}GeO_4$ ("LISICON", where $0\leq x<1$), $Li_{3+y}PO_{4-x}N_x$ ("LIPON")(where $0<x<4$ and $0<y<3$), $Li_{3.25}Ge_{0.25}P_{0.75}S_4$ ("ThioLISICON"), $Li_2O$-$Al_2O_3$-$TiO_2$-$P_2O_5$("LATP"), and/or the like to an inorganic solid electrolyte, such as $Li_2S$-$P_2S_5$, $SiS_2$, $GeS_2$, $B_2S_3$, or a combination thereof, may be utilized as the sulfide solid electrolyte. Non-limiting examples of the sulfide solid electrolyte material may be: $Li_2S$-$P_2S_5$; $Li_2S$-$P_2S_5$-LiX (where X may be a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$ (where $0<m<10$, $0<n<10$, and Z may be Ge, Zn, or Ga); $Li_2S$-$GeS_2$; $Li_2S$-$SiS_2$-$Li_3PO_4$; and $Li_2S$-$SiS_2$-$Li_pMO_q$ (where $0<p<10$, $0<q<10$, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and/or the like. Also, in some embodiments, a calcination process may be performed after the treatment. The sulfide-based solid electrolyte may be amorphous or crystalline, or may be in a mixed state.

The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include (e.g., may exclude) a (or any) liquid. The polymer solid electrolyte includes a polymer, and examples of the polymer may include polyethyleneoxide (PEO), polyvinylidenefluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP), sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, embodiments of the present disclosure are not limited thereto, and any polymer electrolytes commonly available in the art may also be utilized. Any lithium salts commonly available in the art may also be utilized. Non-limiting examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y may each independently be from 1 to 20), LiCl, LiI, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more.

The gel electrolyte is, for example, a polymer gel electrolyte. In some embodiments, the gel electrolyte may have a gel state without including a polymer.

The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. In some embodiments, the polymer gel electrolyte may have, for example, a gel state without including a liquid. In one or more embodiments, the liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in the polymer solid electrolyte. The organic solvent may be selected from organic solvents utilized in liquid electrolytes. The lithium salt may be selected from lithium salts utilized in polymer solid electrolyte. The ionic liquid refers to a salt in a liquid state, and/or a molten salt at room temperature composed solely of ions and having a melting point below room temperature. The ionic liquid may include, for example, at least one compound including: a) at least one cation selected from among ammonium, pyrimidium, pyridinium, imidazolium, piperidinium, pyrazolium, oxazolium, pyridazinium, phosphonium, sulfonium, triazole, and any mixture thereof; and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, in some embodiments, the polymer solid electrolyte may be impregnated with a liquid electrolyte in a secondary battery to form a polymer gel electrolyte. In some embodiments, the polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

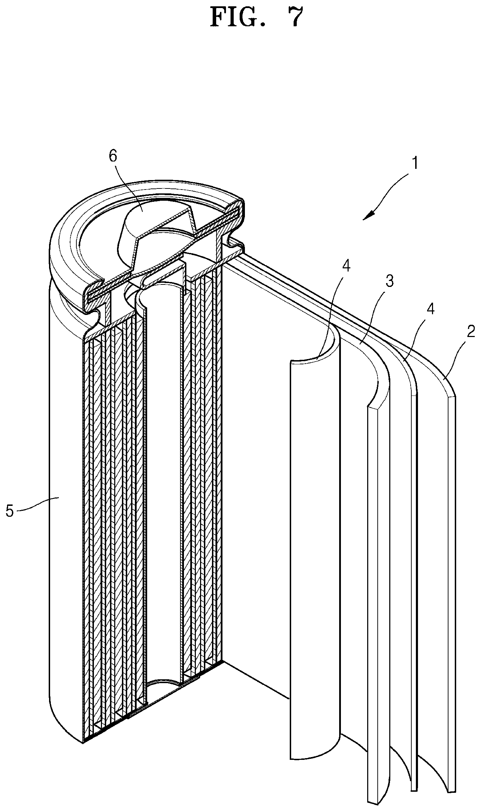

Referring to FIG. 7, a lithium battery 1 according to one or more embodiments may include a cathode 3, an anode 2, and a separator 4. The cathode 3, the anode 2, and the separator 4 may be wound or folded to form a battery structure. The formed battery structure may be accommodated in a battery case 5. Then, the battery case 5 may be filled with an organic electrolyte solution, and sealed with a cap assembly 6, thereby completing the manufacture of the lithium battery 1. The battery case 5 may be cylindrical, but the shape of the battery case 5 is not necessarily limited thereto. For example, the battery case 5 may be a square-type or kind, a thin-film type or kind, and/or the like.

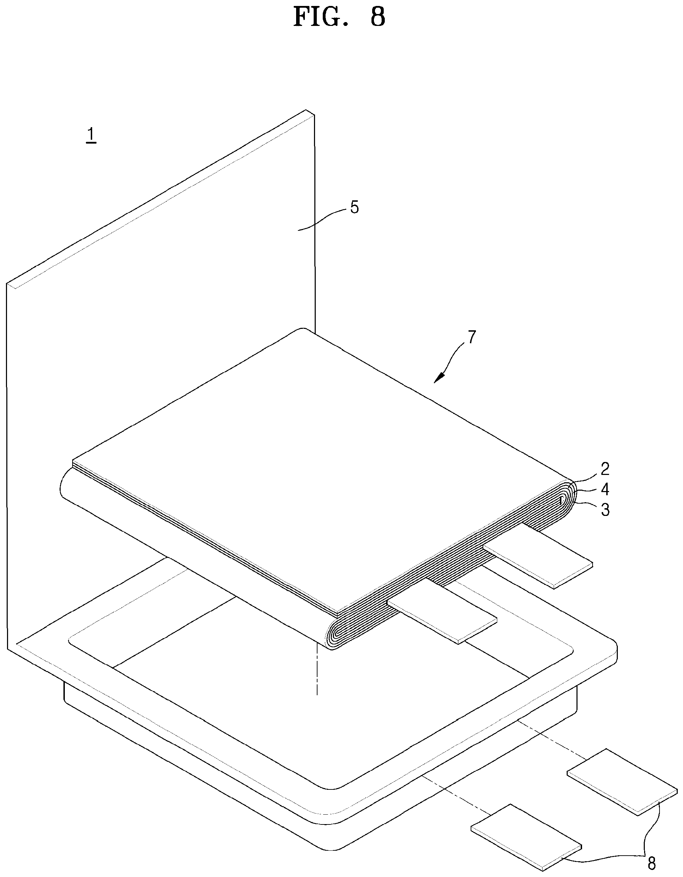

Referring to FIG. 8, a lithium battery 1 according to one or more embodiments may include a cathode 3, an anode 2, and a separator 4. The separator 4 may be between the cathode 3 and the anode 2, and the cathode 3, the anode 2, and the separator 4 may be wound or folded to form a battery structure 7. The formed battery structure 7 may be accommodated in a battery case 5. The lithium battery 1 may include an electrode tab 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type or kind, but the shape of the battery case 5 is not necessarily limited thereto. For example, the battery case 5 may be a cylindrical-type or kind, a thin-film type or kind, and/or the like.

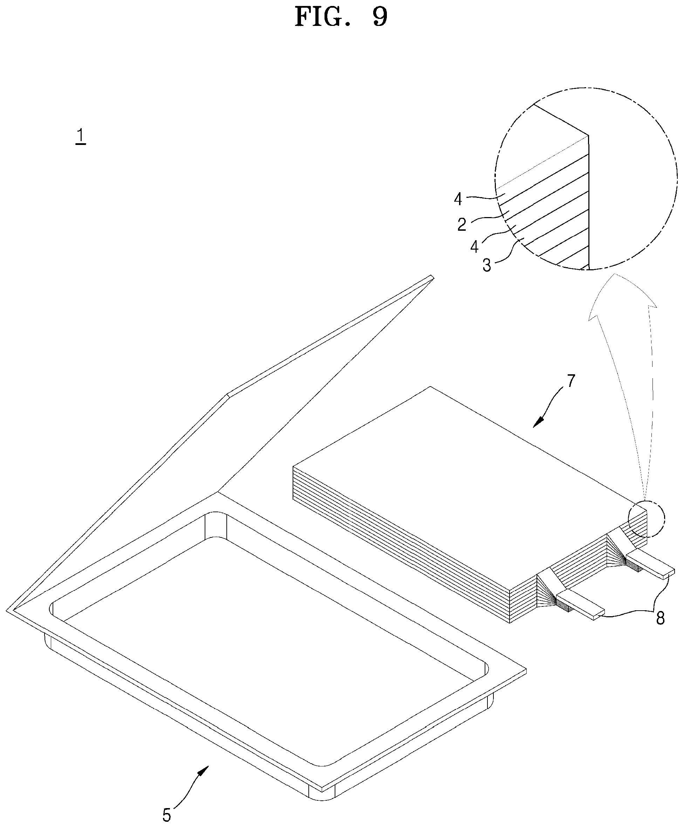

Referring to FIG. 9, a lithium battery 1 according to one or more embodiments may include a cathode 3, an anode 2, and a separator 4. The separator 4 may be between the cathode 3 and the anode 2 to form a battery structure 7. The battery structure 7 may be stacked in a bi-cell structure, and then accommodated in a battery case 5. The lithium battery 1 may include an electrode tab 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type or kind, but the shape of the battery case 5 is not necessarily limited thereto. For example, the battery case 5 may be a cylindrical-type or kind, a thin-film type or kind, and/or the like.

A pouch-type or kind lithium battery corresponds to utilization of a pouch as a battery case for each of lithium batteries of FIGs. 7 to 9. The pouch-type or kind lithium battery may include at least one battery assembly. The separator 4 may be disposed between the cathode 3 and the anode 2 to form a battery assembly. The battery assembly may be laminated as a bi-cell structure, impregnated with an organic electrolyte solution, and accommodated and sealed in a pouch to complete the manufacture of a pouch-type or kind lithium battery. For example, in one or more embodiments, the cathode, anode, and separator may be simply stacked and accommodated in a pouch in the form of an electrode assembly, or may be wound or folded into an electrode assembly in the form of a jelly roll to be then accommodated in a pouch. Then, an organic electrolyte solution may be injected into the pouch and sealed to complete the manufacture of a lithium battery.

Because the lithium battery has excellent or suitable lifespan characteristics and excellent or suitable high-rate characteristics, the lithium battery may be utilized in, for example, an electric vehicle (EV). For example, the lithium battery may be utilized in a hybrid vehicle, such as a plug-in hybrid electric vehicle (PHEV). In some embodiments, the lithium battery may be applicable to fields requiring high-power storage. For example, the lithium battery may be utilized in an electric bicycle, a power tool, and/or the like.

A plurality of the lithium batteries may be stacked to form a battery module, and a plurality of the battery modules may form a battery pack. The battery pack may be utilized in a device that requires high capacity and large output. For example, the battery pack may be utilized in a laptop computer, a smart phone, an electronic vehicle, and/or the like. The battery module may include, for example, multiple batteries and a frame that holds the multiple batteries. The battery pack may include, for example, multiple battery modules and a bus bar that connects the battery modules together. The battery module and/or the battery pact may further include a cooling device. The multiple battery packs may be managed by a battery management system. The battery management system may include a battery pack and an electronic control device connected to the battery pack.

One or more aspects of embodiments of the present disclosure are directed toward a method of preparing the composite cathode active material, and the method includes: applying (e.g., providing) a lithium transition metal oxide; applying (e.g., providing) a composite; applying (e.g., providing) lithium nitrate; and mechanically milling the lithium transition metal oxide, the composite, and lithium nitrate, wherein the composite includes: a first metal oxide (e.g., at least one first metal oxide) represented by Formula $M_aO_b$, where $0<a\leq3$, $0<b<4$, if (e.g., when) a is 1, 2, or 3, and b is not an integer; and a carbon-based material, and the first metal oxide is in a matrix of the carbon-based material, and M is at least one metal selected from among Groups 2 to 13, 15, and 16 of the Periodic Table of Elements (e.g. at least one metal selected from Group 13), wherein a metal in the first metal oxide comprises at least one metal selected from among Al, Nb, Mg, Sc, Ti, Zr, V, W, Mn, Fe, Co, Pd, Cu, Ag, Zn, Sb, and Se, and wherein the carbon-based material is graphene. In the mechanically milling process, the milling method is not particularly limited, and any method capable of directly contacting the lithium transition metal oxide and the composite and lithium nitrate by utilizing a machine available in the art may be utilized.

The lithium transition metal oxide may be provided. The lithium transition metal oxide may be, for example, a compound represented by one of Formulae 1 to 6.

In one or more embodiments, the applying (e.g. providing) of the composite may include, for example, providing a reaction gas including (e.g., consisting of) a carbon source gas to a structure including a metal oxide, followed by performing a heat treatment to provide the composite.

In one or more embodiments, the providing of the composite may include, for example, preparing an undoped composite by supplying reaction gas including (e.g., consisting of) carbon source gas to a second metal oxide (e.g., at least one second metal oxide) represented by $M_aO_c$ (where $0<a\leq3$, $0<c\leq4$, and if (e.g., when) a is 1, 2, or 3, c is an integer) and heat-treating the second metal oxide, wherein M may be at least one metal selected from among Groups 2 to 13, 15, and 16 of the Periodic Table of Elements (e.g. at least one metal selected from Group 13). A reaction temperature may be raised to a heat treatment temperature T. The time required for raising the reaction temperature to the heat treatment temperature T may be in a range of 10 minutes to 4 hours. The heat treatment temperature T may be in a range of 700 °C to 1100 °C. The reaction time may be, for example, in a range of 4 hours to 8 hours. The heat-treated product may then be cooled to room temperature to prepare a composite. The time required for lowering the reaction temperature from the heat treatment temperature T to the room temperature may be, for example, in a range of 1 hour to 5 hours.

The carbon source gas may include a compound represented by Formula 7, or may be a mixed gas including at least one selected from the group consisting of a compound represented by Formula 7, a compound represented by Formula 8, and oxygen-containing gas represented by Formula 9:

$$\text{Formula 7} \qquad C_nH_{(2n+2-a)}[OH]_a,$$

wherein, in Formula 7, n may be an integer from 1 to 20, and a may be 0 or 1;

$$\text{Formula 8} \qquad C_nH_{2n},$$

wherein, in Formula 8, n may be an integer from 2 to 6; and

$$\text{Formula 9} \qquad C_xH_yO_z,$$

wherein, in Formula 9, x may be 0 or an integer from 1 to 20, y may be 0 or an integer from 1 to 20, and z may be 1 or 2.

The compound represented by Formula 7 and the compound represented by Formula 8 may be at least one selected from the group consisting of methane, ethylene, propylene, methanol, ethanol, and propanol. The oxygen-containing gas represented by Formula 9 may include, for example, carbon dioxide ($CO_2$), carbon monoxide (CO), water vapor ($H_2O$), or a mixture thereof.

Following the providing of the reaction gas including (e.g., consisting of) the carbon source gas to the second metal oxide represented by $M_aO_c$ (where $0<a\leq3$, $0<c\leq4$, and if (e.g., when) a is 1, 2, or 3, c is an integer) and heat-treating the second metal oxide, a cooling process may be further performed by utilizing at least one inert gas selected from the group consisting of nitrogen, helium, and argon. The cooling process refers to adjusting the reaction temperature to room temperature (20 °C to 25 °C). In some embodiments, the carbon source gas may further include at least one inert gas selected from the group consisting of nitrogen, helium, and argon.

In the preparation method of the composite, a process of growing a carbon-based material (graphene), may be performed under one or more suitable conditions depending on a gas reaction.

**EP 4 435 901 B1**

In one or more embodiments, according to a first condition, for example, methane may be provided first to a reactor, in which the second metal oxide represented by $M_aO_c$ (where $0<a\leq3$ and $0<c\leq4$, and if (e.g., when) a is 1, 2, or 3, c is an integer) is disposed, and a reaction temperature may be raised to a heat treatment temperature T. The time required for raising the reaction temperature to the heat treatment temperature T may be in a range of 10 minutes to 4 hours, and the heat treatment temperature T may be in a range of 700 °C to 1100 °C. The heat treatment may be performed during a reaction time at the heat treatment temperature T. The reaction time may be, for example, in a range of 4 hours to 8 hours. The heat-treated product may then be cooled to room temperature to prepare a composite. The time required for lowering the reaction temperature from the heat treatment temperature T to the room temperature may be, for example, in a range of 1 hour to 5 hours.

In one or more embodiments, according to a second condition, for example, hydrogen may be provided first to a reactor, in which the second metal oxide represented by $M_aO_c$ (where $0<a\leq3$ and $0<c\leq4$, and if (e.g., when) a is 1, 2, or 3, c is an integer) is disposed, and a reaction temperature may be raised to a heat treatment temperature T. The time required for raising the reaction temperature to the heat treatment temperature T may be in a range of 10 minutes to 4 hours, and the heat treatment temperature T may be in a range of 700 °C to 1100 °C. After the heat treatment is performed at the heat treatment temperature T for a set or predetermined reaction time, methane gas may be supplied, and the heat-treatment may be performed for the residual (e.g., remaining) reaction time. The reaction time may be, for example, in a range of 4 hours to 8 hours. The heat-treated product may then be cooled to room temperature to prepare a composite. In the cooling process, nitrogen may be provided thereto. The time required for lowering the reaction temperature from the heat treatment temperature T to the room temperature may be, for example, in a range of 1 hour to 5 hours.

In one or more embodiments, according to a third condition, for example, hydrogen may be provided first to a reactor, in which the second metal oxide represented by $M_aO_c$ (where $0<a\leq3$ and $0<c\leq4$, and when a is 1, 2, or 3, c is an integer) is disposed, and a reaction temperature may be raised to a heat treatment temperature T. The time required for raising the reaction temperature to the heat treatment temperature T may be in a range of 10 minutes to 4 hours, and the heat treatment temperature T may be in a range of 700 °C to 1100 °C. After the heat treatment is performed at the heat treatment temperature T for a set or predetermined reaction time, mixed gas of methane and hydrogen may be supplied, and the heat-treatment may be performed for the residual (e.g., remaining) reaction time. The reaction time may be, for example, in a range of 4 hours to 8 hours. The heat-treated product may then be cooled to room temperature to prepare a composite. In the cooling process, nitrogen may be provided thereto. The time required for lowering the reaction temperature from the heat treatment temperature T to the room temperature may be, for example, in a range of 1 hour to 5 hours.

In the preparation of the composite, if (e.g., when) the carbon source gas includes water vapor, the composite having excellent or suitable conductivity may be obtained. An amount of water vapor in the gas mixture is not limited, and may be, for example, in a range of 0.01 vol% to 10 vol%, based on 100 vol% of the total carbon source gas. The carbon source gas may be: for example, methane; a mixed gas including methane and inert gas; or a mixed gas including methane and oxygen-containing gas.

In one or more embodiments, the carbon source gas may be: for example, methane; a mixed gas including methane and carbon dioxide; or a mixed gas including methane, carbon dioxide, and water vapor. A molar ratio of methane and carbon dioxide in the mixed gas of methane and carbon dioxide may be in a range of about 1:0.20 to about 1:0.50, about 1:0.25 to about 1:0.45, or about 1:0.30 to about 1:0.40. A molar ratio of methane and carbon dioxide and water vapor in the mixed gas of methane and carbon dioxide and water vapor may be in a range of about 1:0.20 to about 0.50:0.01 to 1.45, about 1:0.25 to about 0.45:0.10 to 1.35, or about 1:0.30 to about 0.40:0.50 to 1.0.

In some embodiments, the carbon source gas may be, for example, carbon monoxide or carbon dioxide. In some embodiments, the carbon source gas may be, for example, a mixed gas of methane and nitrogen. A molar ratio of methane and nitrogen in the mixed gas of methane and nitrogen may be in a range of about 1: 0.20 to about 1: 0.50, about 1: 0.25 to about 1: 0.45, or about 1: 0.30 to about 1: 0.40. In some embodiments, the carbon source gas may not include (e.g., may exclude) inert gas such as nitrogen.

In one or more embodiments, the heat treatment pressure may be selected in consideration of a heat treatment temperature, a composition of a gas mixture, and a desired or suitable coating amount of carbon. The heat treatment pressure may be controlled or selected by adjusting an amount of an inflowing gas mixture and an amount of an outflowing gas mixture. The heat treatment pressure may be, for example, greater than or equal to 0.5 atm, greater than or equal to 1 atm, greater than or equal to 2 atm, greater than or equal to 3 atm, greater than or equal to 4 atm, or greater than or equal to 5 atm.

The time for a heat treatment time is not particularly limited, and may be selected in consideration of a heat treatment temperature, a heat treatment pressure, a composition of a gas mixture, and a desired or suitable coating amount of carbon. For example, in one or more embodiments, a reaction time at the heat treatment temperature may be, for example, in a range of 10 minutes to 100 hours, 30 minutes to 90 hours, or 50 minutes to 40 hours. For example, as time for the heat treatment increases, an amount of graphene (e.g., carbon) deposited increases, and thus the electrical properties of the composite may be improved. However, such a trend may not necessarily be directly proportional to the time. For example, after a set or predetermined period of time, the deposition of carbon (graphene), may no longer occur, or the deposition rate of graphene may be lowered.

Through a gas phase reaction of the aforementioned carbon source gas, even at a relatively low temperature, an undoped composite may be obtained by providing substantially uniform coating of the carbon-based material (coating of graphene), to at least one selected from among the second metal oxide represented by $M_aO_c$ (where $0<a\leq3$, $0<c\leq4$, if (e.g., when) a is 1, 2, or 3, and c is not an integer) and a reduction product thereof that is the first metal oxide represented by $M_aO_b$ (where $0<a\leq3$, $0<b<4$, when a is 1, 2, or 3, and b is not an integer).

The composite may include: for example, a matrix of the carbon-based material (a graphene matrix), having at least one structure selected from among a spherical structure (e.g., a substantially spherical structure), a spiral structure in which a plurality of spherical structures (e.g., substantially spherical structures) are connected, a cluster structure in which a plurality of spherical structures (e.g., substantially spherical structures) are aggregated, and a sponge structure; and at least one selected from among the first metal oxide represented by $M_aO_b$ (wherein $0<a\leq3$, $0<b<4$, if (e.g., when) a is 1, 2, or 3, and b is not an integer) and the second metal oxide represented by $M_aO_c$ (wherein $0<a\leq3$, $0<c\leq4$, and if (e.g., when) a is 1, 2, or 3, c is an integer) disposed in the matrix of the carbon-based material.

Next, the lithium transition metal oxide, the composite, and the lithium nitrate may be mechanically milled. For the milling, a Nobilta mixer and/or the like may be utilized. The number of revolutions of the mixer during milling may be, for example, in a range of about 1,000 rpm to about 2,500 rpm. If (e.g., when) the milling speed is less than 1,000 rpm, the shear force applied to the lithium transition metal oxide, the composite, and the lithium nitrate is weak, and thus a chemical bond may be difficult to form between the lithium transition metal oxide, the composite, and the lithium nitrate. If (e.g., when) the milling speed is significantly high, the composite and the lithium nitrate may be uniformly coated on the lithium transition metal oxide as the complexation is performed in an excessively short time, and thus a substantially uniform and substantially continuous shell may be difficult to form. The milling time may be, for example, in a range of about 5 minutes to about 100 minutes, about 5 minutes to about 60 minutes, or about 5 minutes to about 30 minutes. If (e.g., when) the milling time is significantly short, the composite and the lithium nitrate may not be uniformly coated on the lithium transition metal oxide, and thus a substantially uniform and substantially continuous shell may be difficult to form. If (e.g., when) the milling time is significantly long, the production efficiency may decrease.

In one or more embodiments, an amount of the lithium nitrate may be 3 wt% or less, 2 wt% or less, 1 wt% or less, about 0.1 wt% to about 1 wt%, about 0.1 wt% to about 0.5 wt%, or about 0.1 wt% to about 0.3 wt% (e.g. about 0.2 wt% to about 0.3 wt%, or about 0.25 wt% to about 0.3 wt%), based on 100 wt% of the total weight of the lithium transition metal oxide, the composite, and the lithium nitrate.

In one or more embodiments, an amount of the composite may be 3 wt% or less, 2 wt% or less, or 1 wt% or less, based on the total weight of the lithium transition metal oxide, the composite, and the lithium nitrate. In some embodiments, the amount of the composite may be, for example, in a range of about 0.01 wt% to about 3 wt%, about 0.1 wt% to about 2 wt%, or about 0.1 wt% to about 1 wt%, based on the total weight of the lithium transition metal oxide, the composite, and the lithium nitrate. For example, in some embodiments, the amount of the composite may be in a range of 0.01 parts by weight to 3 parts by weight, 0.1 parts by weight to 3 parts by weight, 0.1 parts by weight to 2 parts by weight, or 0.1 parts by weight to 1 part by weight, based on 100 parts by weight of the mixture of the lithium transition metal oxide, the composite, and the lithium nitrate.

In one or more embodiments, based on 100 wt% of the total weight of the lithium transition metal oxide, the composite, and the lithium nitrate, a total weight of the lithium nitrate and the composite may be, for example, 3 wt% or less, 2 wt% or less, 1 wt% or less, about 0.1 wt% to about 1 wt%, or about 0.1 wt% to about 0.5 wt%, and a total weight ratio of the lithium nitrate to the composite may be in a range of about 1:3 to about 1:3, about 1:2 to about 2:1, or 1:1.

In one or more embodiments, the average particle diameter (D50) of the composite utilized for the mechanical milling of the lithium transition metal oxide, the composite, and the lithium nitrate may be, for example, in a range of about 1 $\mu$m to about 20 $\mu$m, about 3 $\mu$m to about 15 $\mu$m, or about 5 $\mu$m to about 10 $\mu$m. Also, the average particle diameter of the lithium nitrate may be in a range of about 10 nm to about 2,000 nm or about 50 nm to about 1,500 nm.

The disclosure will be described in greater detail through Examples and Comparative Examples. However, the following embodiments are for illustrative purpose only and shall not be construed as limiting the scope of the present disclosure.

**Preparation of composite**

**Preparation Example 1: Al$_2$O$_3$@Gr composite**

Al$_2$O$_3$ particles (average particle diameter: about 20 nanometers (nm)) were placed in a reactor, and then the temperature inside the reactor was raised to 1,000 °C under the condition that CH$_4$ was supplied into the reactor at about 300 standard cubic centimeters per minute (sccm) at 1 atmosphere (atm) for about 30 minutes.

Subsequently, heat treatment was performed thereon while maintaining the temperature same for 7 hours. Then, the temperature inside the reactor was adjusted to room temperature (20 °C to 25 °C) to obtain a composite (GB) in which $Al_2O_3$ particles and $Al_2O_z$ (where $0<z<3$) particles as a reduction product thereof were embedded in graphene.

Here, the amount of aluminium oxide ($Al_2O_3$ particles and $Al_2O_z$ (where $0<z<3$) particles) included in the composite was 60 wt%.

**Preparation of composite cathode active material**

**Example 1: NCA91 coated with 0.2 wt% of $Al_2O_3$@Gr composite (0.12 wt% of aluminium oxide) and 0.1 wt% of LiNO$_3$**

$LiNi_{0.91}Co_{0.05}Al_{0.04}O_2$ (hereinafter, referred to as NCA91), lithium nitrate, and the composite of Preparation Example 1 were milled by utilizing a Nobilta mixer (manufactured by Hosokawa, Japan) at a rotational speed in a range of about 1,000 rpm to about 2,000 rpm for about 5 minutes to about 30 minutes, so as to obtain a composite cathode active material.

The mixing weight ratio of NCA91 : lithium nitrate : the composite of Preparation Example 1 was 99.7:0.1:0.2.

**Example 2: NCA91 coated with 0.2 wt% of $Al_2O_3$@Gr composite (0.12 wt% of aluminium oxide) and 0.2 wt% of LiNO$_3$**

A composite cathode active material was prepared in substantially the same manner as in Example 1, except that the mixing weight ratio of NCA91 : lithium nitrate : the composite of Preparation Example 1 was changed to 99.6:0.2:0.2.

**Example 3: NCA91 coated with 0.2 wt% of $Al_2O_3$@Gr composite (0.12 wt% of aluminium oxide) and 0.3 wt% of LiNO$_3$**

A composite cathode active material was prepared in substantially the same manner as in Example 1, except that the mixing weight ratio of NCA91 : lithium nitrate : the composite of Preparation Example 1 was changed to 99.5:0.3:0.2.

**Comparative Example 1: NCA coated with 0.2 wt% $Al_2O_3$@Gr composite**

A composite cathode active material was prepared in substantially the same manner as in Example 1, except that the $Al_2O_3$@Gr composite of Preparation Example 1 and NCA91 were utilized instead of the $Al_2O_3$@Gr composite of Preparation Example 1, NCA91, and the lithium nitrate. The mixing weight ratio of the NCA91 to the $Al_2O_3$@Gr composite was 99.8:0.2.

**Comparative Example 2: NCA coated with LiNO$_3$**

$LiNi_{0.91}Co_{0.05}Al_{0.04}O_2$ (hereinafter, referred to as NCA) and the lithium nitrate were milled by utilizing a Nobilta mixer (manufactured by Hosokawa, Japan) at a rotational speed in a range of about 1,000 rpm to about 2,000 rpm for about 5 minutes to about 30 minutes, so as to obtain a composite cathode active material. The mixing weight ratio of the NCA to the lithium nitrate was 99.7:0.3.

**Comparative Example 3: Blend of NCA coated with $Al_2O_3$@Gr composite and LiNO$_3$-coated NCA**

NCA and the composite of Preparation Example 1 were milled by utilizing a Nobilta mixer (manufactured by Hosokawa, Japan) at a rotational speed in a range of about 1,000 rpm to about 2,000 rpm for about 5 minutes to about 30 minutes, so as to obtain a first composite cathode active material. Here, the mixing weight ratio of the NCA to the composite of Preparation Example 1 was 99.6:0.4.

The first composite cathode active material and the composite cathode active material of Comparative Example 2 were mixed at a mixing weight ratio of 1:1, so as to obtain a composite cathode active material.

**Comparative Example 4: NCA coated with $Al_2O_3$@Gr composite and LiBr**

A composite cathode active material was prepared in substantially the same manner as in Example 1, except that LiBr was utilized instead of the lithium nitrate.

**Comparative Example 5: Bare NCA91**

NCA91 was utilized as a cathode active material as it is.

**Manufacture of lithium battery (half cell)**

**Example 4**

**Manufacture of cathode**

A mixture of the composite cathode active material of Example 1, a carbon conductive material (e.g., Denka Black), and polyvinylidene fluoride (PVdF) mixed at a weight ratio of 96:2:2 was mixed with N-methyl pyrrolidone (NMP) in an agate mortar to prepare a slurry.

The slurry was bar-coated on an aluminium current collector having a thickness of 15 $\mu$m, dried at room temperature, further dried in vacuum at 120 °C, and rolled and punched to prepare a cathode plate having a thickness of 55 $\mu$m. The loading level of the electrode was 10.5 mg/cm$^2$, and the mixture density of the electrode was 3.6 g/cc.

**Manufacture of coin cell**

Each coin cell was prepared by utilizing the cathode plate prepared above, a lithium metal as a counter electrode, a PTFE separator, and a solution in which 1.15 M LiPF$_6$ and 1.5 wt% of vinylene carbonate (VC) were dissolved in ethylene carbonate (EC) + ethyl methyl carbonate (EMC) + dimethyl carbonate (DMC) (at a volume ratio of 2:4:4) as an electrolyte.

**Examples 5 and 6**

Each coin cell was manufactured in substantially the same manner as in Example 4, except that the composite cathode active material of each of Examples 2 and 3 was respectively utilized instead of the composite cathode active material of Example 1.

**Comparative Examples 6 to 10**

Each coin cell was manufactured in substantially the same manner as in Example 4, except that the composite cathode active material of each of Comparative Examples 1 to 5 was respectively utilized instead of the composite cathode active material of Example 1.

**Evaluation Example 1: XPS spectrum evaluation**

In the process of preparing the undoped composite of Preparation Example 1, XPS spectra were measured by utilizing Quantum 2000 (Physical Electronics) over time. Before heating, XPS spectra of C 1s orbitals and Al 2p orbitals of samples were measured after 1 minute, after 5 minutes, after 30 minutes, after 1 hour, and after 4 hours, respectively. At the initial heating, the peak for the Al 2p orbital appeared, and the peak for the C 1s orbital did not appear. After 30 minutes, the peak for the 1s orbital appeared clearly, and the size of the peak for the Al 2p orbital significantly reduced.

After 30 minutes, near 284.5 electron volt (eV), peaks for C 1s orbitals appeared clearly due to C-C bonds and C=C bonds due to graphene growth.

As reaction time elapsed, the oxidation number of aluminium decreased, and thus the peak position of the Al 2p orbital was shifted toward a lower binding energy (eV).

Accordingly, it was confirmed that, as the reaction proceeded, graphene was grown on Al$_2$O$_3$ particles, and Al$_2$O$_x$ (where 0<x<3), which is a reduction product of Al$_2$O$_3$, was produced.

The average amounts of carbon and aluminium were measured through XPS analysis results in 10 regions of the composite sample prepared in Preparation Example 1. With respect to the measurement results, a deviation of the aluminium amount for each region was calculated. The deviation of the aluminium amount was expressed as a percentage of the average value, and this percentage was referred to as uniformity. The percentage of the average value of the deviation of the aluminium amount, that is, the uniformity of the aluminium amount was 1 %. Therefore, it was confirmed that aluminium oxide was uniformly distributed in the composite prepared in Preparation Example 1.

**Evaluation Example 2: Evaluation of XPS spectrum evaluation and residual lithium**

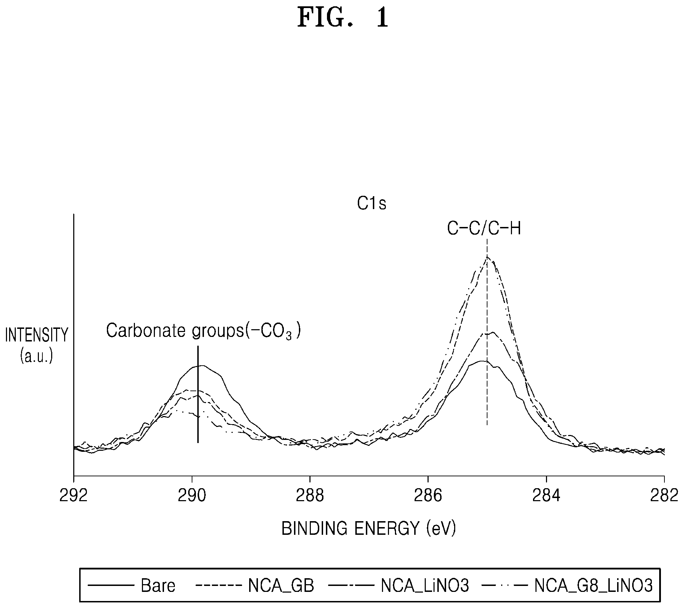

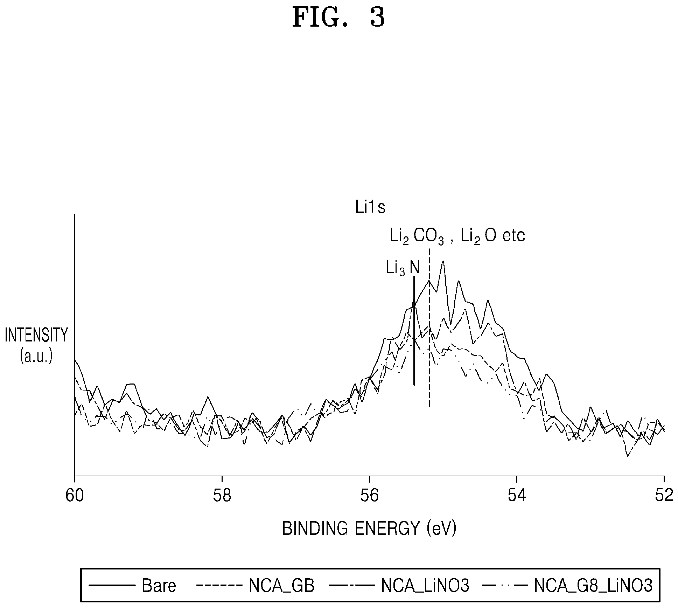

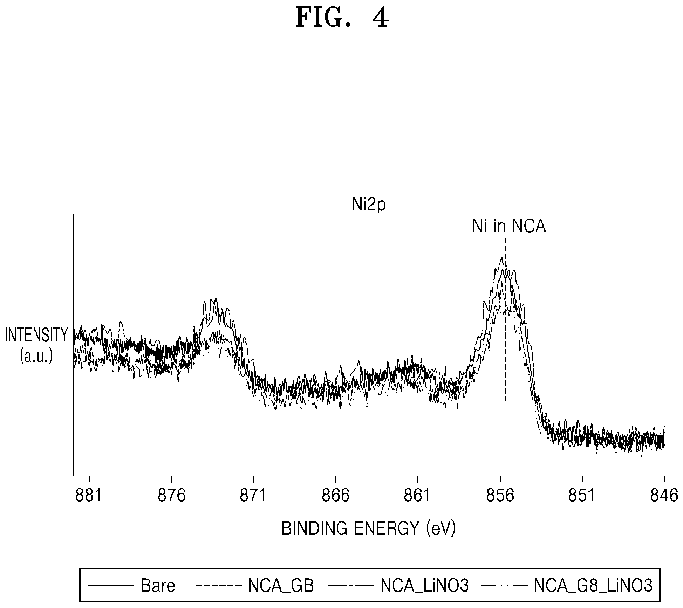

The XPS spectra for each of the composite cathode active materials of Example 3 and Comparative Examples 1 and 2 and the bare NCA of Comparative Example 5 were shown in FIGs. 1 to 4. Referring to FIGs. 1 to 4, bare, NCA_GB, NCA_LiNO₃, and NCA_GB_LiNO₃ each respectively represent the XPS analysis spectra for the bare NCA of Comparative Example 5 and the composite cathode active materials of Comparative Examples 1 and 2 and Example 3, and FIGs. 1 to 4 respectively represent the XPS analysis spectra for C1s, O1s, Li1s, and Ni2p.

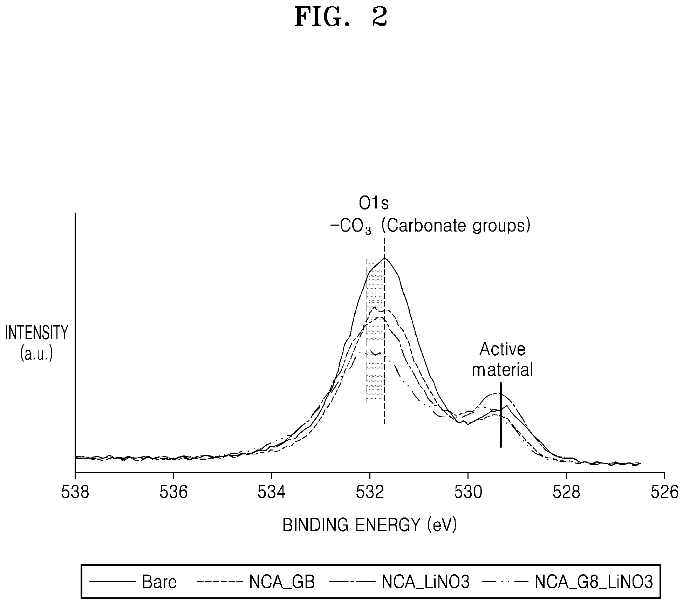

The XPS analysis was performed to understand the reason why the electrochemical properties of the samples added with $LiNO_3$ were improved. When analyzing the C1s and O1s peaks shown in FIG. 1 and FIG. 2, it was confirmed that the amount of carbonate groups on the surface of the NCA particles decreased after being coated with $Al_2O_3$@Gr and $LiNO_3$. Moreover, the simultaneous $Al_2O_3$@Gr-$LiNO_3$ coating provided the most significant reduction of the $CO_3$ groups, and at the same time, the Li 1s peak shifted to higher binding energy, implying the formation of the $Li_3N$ phase responsible for the enhanced ionic conductivity of the NCA cathode active material.

The XPS peak of carbonate groups was mainly caused by residual $Li_2CO_3$ remaining on the surface of the NCA cathode particles after synthesis. Therefore, by measuring the amount of residual lithium determined by titration of LiOH and $Li_2CO_3$, it was demonstrated that the amount of residual lithium compounds on the surface of the NCA particles decreased after the composite (GB)-$LiNO_3$ coating (see Table 1). In Table 1, the amount of residual lithium compounds was evaluated according to the following methods.

**Amount of residual lithium**

A sample was titrated with a 1 N HCl solution to measure the amount of lithium in the sample solution.

To measure the amount of lithium in the sample solution, an automatic titrator was utilized, and a first inflection point (EP1) at which the pH rapidly changed at pH 7 to pH 9 and an end point (FP) at which the pH reached 5 were measured. Then, according to Equations 1 and 2, the amount of $Li_2CO_3$ and the amount of LiOH were calculated:

## Equation 1

$$\text{Amount of } Li_2CO_3 \text{ (\%): (FP-EP1)} \times 0.1 \times 0.001 \times (\text{Mw of } Li_2CO_3 \text{ (73.89)/5)} \times 100$$

## Equation 2

$$\text{Amount of LiOH (\%): (2} \times \text{EP1-FP)} \times 0.1 \times 0.001 \times (\text{Mw of LiOH (23.94)/5)} \times 100$$

The amount of lithium remaining on the final surface was measured by adding the calculated amount of $Li_2CO_3$ and the calculated amount of LiOH, and was converted into wt% based on the total weight of the cathode active material. The results are shown in Table 1.

Table 1

| Division | Sample name | $Li_2CO_3$ (wt.%) | LiOH (wt. %) | Residual lithium (ppm) |
|---|---|---|---|---|
| Example 3 | NCA coated with 0.2 wt.% GB and 0.3 wt.% $LiNO_3$ | 0.45 | 0.34 | 1410 |
| Comparative Example 1 | NCA coated with 0.2 wt. % GB | 0.47 | 0.50 | 1883 |
| Comparative Example 2 | NCA coated with 0.3 wt.% $LiNO_3$ | 0.47 | 0.41 | 1,623 |
| Comparative Example 5 | Bare NCA | 0.70 | 0.56 | 2273 |

As shown in Table 1, the amount of residual lithium in the composite cathode active material of Example 3 was reduced compared to Comparative Examples 1, 2 and 5.

**Evaluation Example 3: SEM, HR-TEM, and SEM-EDX analysis**

Scanning electron microscopy (SEM), high-resolution transmission electron microscopy (HR-TEM), and energy-dispersive X-ray (EDX) analysis were performed on the composite cathode active material of Example 1 and the bare NCA of Comparative Example 5.

For the SEM-EDX analysis, FEI Titan 80-300 available from Philips Company was utilized.

The composite of Preparation Example 1 showed a structure in which $Al_2O_3$ particles and $Al_2O_z$ (where 0<z<3) particles as a reduction product of the $Al_2O_3$ particles were embedded in graphene. It was confirmed that the graphene layer was disposed on the outer surface of at least one particle selected from among $Al_2O_3$ and $Al_2O_z$ particles (where $0<z<3$). The at least one particle selected from among $Al_2O_3$ and $Al_2O_z$ particles (where $0<z<3$) were uniformly distributed in the graphene matrix. The at least one particle selected from among $Al_2O_3$ and $Al_2O_z$ particles (where $0<z<3$) had an average particle diameter of about 20 nm. The composite of Preparation Example 1 had an average particle diameter in a range of about 100 nm to about 200 nm. The composite cathode active material of Example 1 also exhibited a structure and an average particle diameter similar to those of the composite of Preparation Example 1.

It was confirmed that a shell formed by the composite including the lithium nitrate and graphene was disposed on the NCA core in the composite cathode active material of Example 1.

The SEM-EDX analysis was performed on the bare NCA of Comparative Example 5 and the composite cathode active material of Example 1.

It was confirmed that the concentration of aluminium (Al) distributed on the surface of the composite cathode active material of Example 1 increased compared to the surface of the bare NCA composite cathode active material of Comparative Example 5.

Therefore, it was confirmed that a shell was formed by uniformly coating the NCA core with the composite of Preparation Example 1 in the composite cathode active material of Example 1.

**Evaluation Example 4: Charge/discharge characteristics evaluation at room temperature (25 °C)**

Each of the lithium batteries prepared in Examples 4 to 6 and Comparative Examples 6, 7, and 10 was charged with a constant current of 0.1 C rate at 25 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) (1st cycle). The cycle was repeated (50 times) until the 50th cycle under substantially the same conditions.

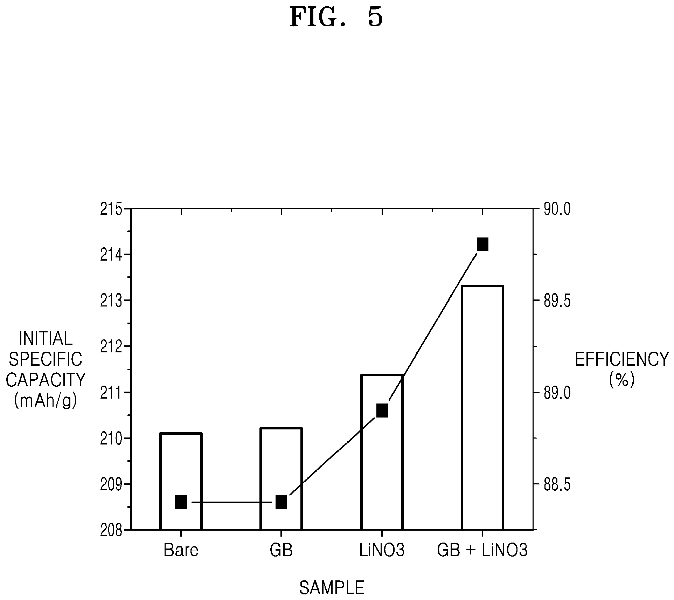

In all charge/discharge cycles, a 10-minute stop time was provided after every one charge/discharge cycle. Some of the results of the charging and discharging experiments at room temperature are shown in Table 2 and FIG. 5. FIG. 5 shows the initial specific capacity (bar) and initial efficiency (■) characteristics of the lithium batteries of Example 6 and Comparative Examples 6, 7, and 10. Here, the initial efficiency is defined by Equation 3:

## Equation 3

Initial efficiency [%]=[discharge capacity in formation cycle/charge capacity in formation cycle]×100

**Evaluation Example 5: Evaluation of charge and discharge characteristics at high temperature** (45 °C)

Each of the lithium batteries of Examples 4 to 6 and Comparative Examples 6, 7, and 10 was charged with a constant current of 0.1 C rate at 45 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 45 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) (1st cycle). The cycle was repeated (50 times) until the 50th cycle under substantially the same conditions.

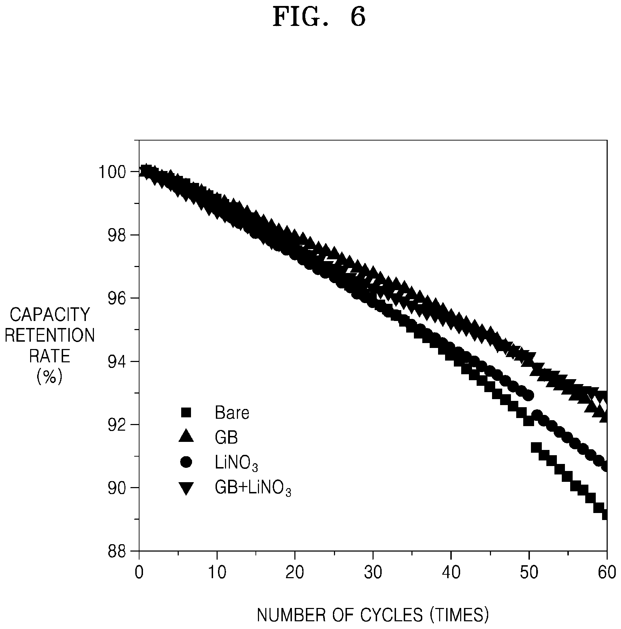

In all charge/discharge cycles, a 10-minute stop time was provided after every one charge/discharge cycle. Some of the results of the charging and discharging experiments at a high temperature are shown in Table 2 and FIG. 6. FIG. 6 shows the capacity retention characteristics of the lithium batteries of Example 6 and Comparative Examples 6, 7, and 10.

The capacity retention rate is defined by Equation 4:

## Equation 4

Capacity retention (%)=(discharge capacity in 50$^{th}$ cycle/discharge capacity in 1$^{st}$ cycle)×100 %

**Evaluation Example 6: Resistance**

The internal resistance, DC-IR, of each of the lithium batteries of Examples 4 to 6 and Comparative Examples 6, 7, and 10 was measured at 25 ° C, and the results are shown in Table 2. For the measurement of the internal resistance, after manufacturing lithium batteries, the internal resistance was measured at SOC 50 % while charging and discharging the batteries at 1/3 C for 10 seconds. Here, the SOC 50 % refers to a state in which the battery is charged to a charging capacity of 50 % when the total charging capacity of the battery is 100 %. Some of the results are shown in Table 2.

**Evaluation Example 7: Evaluation of high rate characteristics at room temperature**

Each of the lithium batteries of Examples 4 to 6 and Comparative Examples 6, 7, and 10 was charged with a constant current of 0.1 C rate at 25 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.80 V (vs. Li) (formation cycle).
Each of the lithium batteries having undergone the formation cycle was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) (1$^{st}$ cycle).
Each of the lithium batteries having undergone the 1$^{st}$ cycle was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.5 C rate until the voltage reached 2.8 V (vs. Li) (2$^{nd}$ cycle).
Each of the lithium batteries having undergone the 2$^{nd}$ cycle was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 1.0 C rate until the voltage reached 2.8 V (vs. Li) (3$^{rd}$ cycle).
Each of the lithium batteries having undergone the 3$^{rd}$ cycle was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 2.0 C rate until the voltage reached 2.8 V (vs. Li) (4$^{th}$ cycle).
In all charge/discharge cycles, a 10-minute stop time was provided after every one charge/discharge cycle. Some of the results of the charge/discharge test at room temperature are shown in Table 2. The high rate characteristics are defined by Equation 5:

## Equation 5

High rate characteristics [%] = [discharge capacity at 2.0 C rate (discharge capacity at 4$^{th}$ cycle) /

discharge capacity at 0.2 C rate (discharge capacity at 1$^{st}$ cycle)] × 100

Table 2

| Division | Sample name | Initial charging/dischargin g efficiency (%)@ 25 °C | | | Specific capacity @ 45 °C | High-rate characteristic s (%) | Initial resistance | Capacity retention rate @45 °C (after 50 cycles) | | Resistance |
|---|---|---|---|---|---|---|---|---|---|---|
| | | 0.2 C chargin g (mAh/g ) | 0.2 C dischar ging (mAh/g ) | Eff. (%) | 0.2 C dischargi ng (mAh/g) | 2C/0.2 C | DC-IR SOC=50% (Ohm) | Discharg e capacity (mAh/g) | Retentio n (%) | DC-IR SOC=50% (Ohm) |
| Example 4 | 0.2 wt.% GB, 0.1 wt.% $LiNO_3$ | 238.1 | 212.8 | 89.4 | 232.5 | 95.8 | 4.5 | 209.2 | 93.9 | 8.2 |
| Example 5 | 0.2 wt.% GB, 0.2 wt.% $LiNO_3$ | 238.5 | 213.4 | 89.5 | 232.7 | 96.0 | 4.9 | 209.1 | 93.8 | 8.2 |
| Example 6 | 0.2 wt.% GB, 0.3 wt.% $LiNO_3$ | 237.6 | 213.3 | 89.8 | 232.0 | 96.5 | 4.6 | 209.2 | 94.1 | 7.2 |
| Comparative Example 6 | 0.2 wt.% GB | 237.8 | 210.3 | 88.4 | 232.4 | 95.5 | 4.4 | 209.0 | 94.0 | 7.8 |
| Comparative Example 7 | 0.3 wt.% $LiNO_3$ | 237.7 | 211.4 | 88.9 | 231.7 | 95.1 | 4.8 | 205.7 | 92.9 | 9.2 |
| Comparative Example 10 | Bare NCA | 237.5 | 210.1 | 88.4 | 231.7 | 94.1 | 4.9 | 203.8 | 92.1 | 9.4 |

As shown in Table 2, it was confirmed that the internal resistance of the lithium batteries of Examples 4 to 6 was improved while the initial efficiency, specific capacity, and capacity retention rate were improved, compared to the lithium batteries of Comparative Examples 6, 7, and 10. Accordingly, it was confirmed that the addition of lithium nitrate to the shell helped to increase the initial cycle discharge capacity and coulombic efficiency, improved the capacity retention rate after 50 cycles at 45 °C, and reduced the DC-IR after 50 cycles.

According to one or more embodiments of the present disclosure, a composite cathode active material including a shell that includes a first metal oxide, a carbon-based material, and lithium nitrate may improve characteristics in terms of initial efficiency, initial specific capacity, and resistance, and may improve a capacity retention rate.

As utilized herein, the singular forms "a," "an," and "the" are intended to include the plural forms as well, unless the context clearly indicates otherwise. Further, the utilization of "may" when describing embodiments of the present disclosure may refer to "one or more embodiments of the present disclosure".

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the present disclosure, when particles, nanostructure, or nanotubes are spherical or circular, "size" or "diameter" indicates a diameter of a particle, nanostructure, or nanotube or an average diameter of particle nanostructure, or nanotube, and when the particles, nanostructures or nanotubes are non-spherical or non-circular, the "size" or "diameter" indicates a major axis length or an average major axis length. For example, when particles are spherical, "diameter" indicates a particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the invention as defined by the appended claims.

## Claims

1. A composite cathode active material comprising:

   a core comprising a lithium transition metal oxide; and
   a shell conformed to a surface of the core,
   wherein,
   the shell comprises:

   lithium nitrate, $LiNO_3$; and
   a conductive carbon-based composite,

   the conductive carbon-based composite comprises:

a first metal oxide represented by $M_aO_b$, where $0<a\leq3$ and $0<b<4$, and if a is 1, 2, or 3, b is not an integer; and
a carbon-based material,

the first metal oxide is in a matrix of the carbon-based material,
M is at least one metal selected from among Groups 2 to 13, 15, and 16 of the Periodic Table of Elements. wherein a metal in the first metal oxide comprises at least one metal selected from among Al, Nb, Mg, Sc, Ti, Zr, V, W, Mn, Fe, Co, Pd, Cu, Ag, Zn, Sb, and Se, and
wherein the carbon-based material is graphene.

2. The composite cathode active material as claimed in claim 1, wherein an amount of lithium nitrate in the shell is 3 wt% or less based on 100 wt% of the total weight of the composite cathode active material.

3. The composite cathode active material as claimed in claim 1 or claim 2, wherein the shell further comprises at least one selected from among $Li_3N$, $LiNO_2$, and $LiN_xO_y$, where $0.5\leq x\leq1$ and $2\leq y\leq3.5$.

4. The composite cathode active material as claimed in any one of claims 1 to 3, wherein,

an amount of a first metal in the first metal oxide in the shell is about 1 at% to about 10 at%, based on the total number of atoms in the shell, and/or
an amount of oxygen in the shell is about 1 at% to about 20 at%, based on the total number of atoms in the shell, and/or
an amount of nitrogen in the shell is 1 at% to about 12 at%, based on the total number of atoms in the shell.

5. The composite cathode active material as claimed in any one of claims 1 to 4, wherein an amount of carbon in the shell is about 65 at% to about 99 at%, based on the total number of atoms in the shell.

6. The composite cathode active material as claimed in any one of claims 1 to 5, wherein the first metal oxide is selected from among: $Al_2O_z$, where $0<z<3$; $NbO_x$, where $0<x<2.5$; $MgO_x$, where $0<x<1$; $Sc_2O_z$, where $0<z<3$; $TiO_y$, where $0<y<2$; $ZrO_y$, where $0<y<2$; $V_2O_z$, where $0<z<3$; $WO_y$, where $0<y<2$; $MnO_y$, where $0<y<2$; $Fe_2O_z$, where $0<z<3$; $Co_3O_w$, where $0<w<4$; $PdO_x$, where $0<x<1$; $CuO_x$, where $0<x<1$; $AgO_x$, where $0<x<1$; $ZnO_x$, where $0<x<1$; $Sb_2O_z$, where $0<z<3$; and $SeO_y$, where $0<y<2$.

7. The composite cathode active material as claimed in any one of claims 1 to 6, wherein the shell has a thickness in a range of about 1 nm to about 5 $\mu$m.

8. The composite cathode active material as claimed in any one of claims 1 to 7, wherein,

the shell comprises:

lithium nitrate; and
at least one selected from among: the conductive carbon-based composite comprising the first metal oxide and the carbon-based material, and a milling product of the conductive carbon-based composite, and

an amount of the at least one selected from among the conductive carbon-based composite and the milling product of the conductive carbon-based composite is 3 wt% or less based on the total weight of the composite cathode active material.

9. The composite cathode active material as claimed in any one of claims 1 to 8, wherein,

(i) the carbon-based material has a branched structure, and the first metal oxide is distributed in the branched structure, and
the branched structure comprises a plurality of carbon-based material particles in contact with one another; and/or
(ii) the carbon-based material has at least one structure selected from among a spherical structure, a spiral structure in which a plurality of the spherical structures are linked to one another, and a cluster structure in which a plurality of the spherical structures are aggregated, and the first metal oxide is distributed in the spherical structure, and a size of the spherical structure is in a range of about 50 nm to about 300 nm, a size of the spiral structure is in a range of about 500 nm to about 100 $\mu$m, and a size of the cluster structure is in a range of about 0.5 mm to about 10 mm,

wherein the conductive carbon-based composite has at least one of a crumpled faceted-ball structure or a planar structure, and the first metal oxide is distributed inside or on a surface of the at least one of the crumpled faceted-ball structure and the planar structure, and/or
wherein the carbon-based material extends from the first metal oxide by a distance of less than or equal to 10 nm, and comprises at least 1 to 20 carbon-based material layers, and a total thickness of the carbon-based material is in a range of about 0.6 nm to about 12 nm.

10. The composite cathode active material as claimed in any one of claims 1 to 9, wherein the lithium transition metal oxide is selected from among compounds represented by Formulae 1 to 6:

Formula 1 $\quad\quad Li_aNi_xCo_yM_zO_{2-b}A_b$

in Formula 1,

$1.0 \leq a \leq 1.2$, $0 \leq b \leq 0.2$, $0.8 \leq x < 1$, $0 < y \leq 0.3$, $0 < z \leq 0.3$, and $x+y+z=1$,
M is manganese, cobalt, niobium, vanadium, magnesium, gallium, silicon, tungsten, molybdenum, iron, chromium, copper, zinc, titanium, aluminium, or a combination thereof, and
A is fluorine, sulfur, chlorine, bromine, or a combination thereof,

Formula 2 $\quad\quad LiNi_xCo_yMn_zO_2$

Formula 3 $\quad\quad LiNi_xCo_yAl_zO_2$

wherein, in Formulae 2 and 3, $0.8 \leq x \leq 0.95$, $0 < y \leq 0.2$, $0 < z \leq 0.2$, and $x+y+z=1$,

Formula 4 $\quad\quad LiNi_xCo_yMn_vAl_wO_2$

wherein, in Formula 4, $0.8 \leq x \leq 0.95$, $0 < y \leq 0.2$, $0 < v \leq 0.2$, $0 < w \leq 0.2$, and $x+y+v+w=1$, and

Formula 5 $\quad\quad Li_aCo_xM_yO_{2-b}A_b$

in Formula 5,

$1.0 \leq a \leq 1.2$, $0 \leq b \leq 0.2$, $0.9 \leq x \leq 1$, $0 \leq y \leq 0.1$, and $x+y=1$,
M is manganese, niobium, vanadium, magnesium, gallium, silicon, tungsten, molybdenum, iron, chromium, copper, zinc, titanium, aluminium, or a combination thereof, and
A is fluorine, sulfur, chlorine, bromine, or a combination thereof,
Formula 6
$LiCoO_2$.

11. A cathode (3) comprising the composite cathode active material as claimed in any one of claims 1 to 10.

12. A lithium battery (1) comprising:

the cathode (3) as claimed in claim 11;
an anode (2); and
an electrolyte between the cathode (3) and the anode (2).

13. The lithium battery (1) as claimed in claim 12, wherein

the cathode (3) comprises a cathode current collector, the anode (2) comprises an anode current collector, and at least one of the cathode current collector or the anode current collector comprises a base film and a metal layer on one or both surfaces of the base film,
the base film comprises a polymer, the polymer comprising polyethylene terephthalate, polyethylene, polypropylene, polybutylene terephthalate, polyimide, or a combination thereof, and
the metal layer comprises indium, copper, magnesium, stainless steel, titanium, iron, cobalt, nickel, zinc, aluminium, germanium, lithium, or an alloy thereof; and/or

wherein the electrolyte comprises a liquid electrolyte, a solid electrolyte, a gel electrolyte, or a combination thereof;

optionally wherein the electrolyte comprises the solid electrolyte and/or the gel electrolyte, and

wherein the solid electrolyte is an oxide-based solid electrolyte, a sulfide-based solid electrolyte, a polymer solid electrolyte, or a combination thereof, and the gel electrolyte comprises a polymer gel electrolyte.

**14.** A method of preparing a composite cathode active material, the method comprising:

applying a lithium transition metal oxide;

applying a composite;

applying lithium nitrate; and

mechanically milling the lithium transition metal oxide, the composite, and lithium nitrate,

wherein the composite comprises: a first metal oxide represented by $M_aO_b$, where $0<a\leq3$, $0<b<4$, and if a is 1, 2, or 3, b is not an integer; and a carbon-based material, and

the first metal oxide is in a matrix of the carbon-based material, and M is at least one metal selected from among Groups 2 to 13, 15, and 16 of the Periodic Table of Elements;

optionally wherein the applying the composite comprises:

supplying reaction gas including a carbon source gas to a second metal oxide represented by $M_aO_c$, where $0<a\leq3$, $0<c\leq4$, and if a is 1, 2, or 3, c is an integer, and performing heat treatment on the reaction gas to provide an undoped composite; and

preparing the composite by contacting the undoped composite with lithium nitrate,

wherein M is at least one metal selected from among Groups 2 to 13, 15, and 16 of the Periodic Table of Elements. wherein a metal in the first metal oxide comprises at least one metal selected from among Al, Nb, Mg, Sc, Ti, Zr, V, W, Mn, Fe, Co, Pd, Cu, Ag, Zn, Sb, and Se, and

wherein the carbon-based material is graphene.

**Patentansprüche**

**1.** Verbundkathodenaktivmaterial, umfassend:

einen Kern, umfassend ein Lithium-Übergangsmetalloxid; und

eine Hülle, die an eine Oberfläche des Kerns angepasst ist,

wobei

die Hülle umfasst:

Lithiumnitrat, $LiNO_3$; und

einen leitfähigen Verbundstoff auf Kohlenstoffbasis,

wobei der leitfähige Verbundstoff auf Kohlenstoffbasis umfasst:

ein erstes Metalloxid, dargestellt durch $M_aO_b$, wobei $0<a\leq3$ und $0<b<4$, und wenn a 1, 2 oder 3 ist, b keine ganze Zahl ist; und

ein Material auf Kohlenstoffbasis,

das erste Metalloxid in einer Matrix aus dem Material auf Kohlenstoffbasis vorliegt,

M mindestens ein Metall ist, ausgewählt aus den Gruppen 2 bis 13, 15 und 16 des Periodensystems der Elemente, wobei ein Metall in dem ersten Metalloxid mindestens ein Metall, ausgewählt aus Al, Nb, Mg, Sc, Ti, Zr, V, W, Mn, Fe, Co, Pd, Cu, Ag, Zn, Sb und Se, umfasst und

wobei das Material auf Kohlenstoffbasis Graphen ist.

**2.** Verbundkathodenaktivmaterial nach Anspruch 1, wobei die Menge an Lithiumnitrat in der Hülle 3 Gew.-% oder weniger, bezogen auf 100 Gew.-% des Gesamtgewichts des Verbundkathodenaktivmaterials, beträgt.

**3.** Verbundkathodenaktivmaterial nach Anspruch 1 oder Anspruch 2, wobei die Hülle ferner mindestens eines, ausgewählt aus $Li_3N$, $LiNO_2$ und $LiN_xO_y$, wobei $0,5\leq x\leq1$ und $2\leq y\leq3,5$, umfasst.

**4.** Verbundkathodenaktivmaterial nach einem der Ansprüche 1 bis 3, wobei

eine Menge eines ersten Metalls im ersten Metalloxid in der Hülle etwa 1 At.-% bis etwa 10 At.-%, bezogen auf die Gesamtzahl der Atome in der Hülle, beträgt und/oder

eine Menge an Sauerstoff in der Hülle etwa 1 At.-% bis etwa 20 At.-%, bezogen auf die Gesamtzahl der Atome in der Hülle, beträgt und/oder

eine Menge an Stickstoff in der Hülle 1 At.-% bis etwa 12 At.-%, bezogen auf die Gesamtzahl der Atome in der Hülle, beträgt.

5. Verbundkathodenaktivmaterial nach einem der Ansprüche 1 bis 4, wobei eine Menge an Kohlenstoff in der Hülle etwa 65 At.-% bis etwa 99 At.-%, bezogen auf die Gesamtzahl der Atome in der Hülle, beträgt.

6. Verbundkathodenaktivmaterial nach einem der Ansprüche 1 bis 5, wobei das erste Metalloxid ausgewählt ist aus: $Al_2O_z$, wobei $0<z<3$; $NbO_x$, wobei $0<x<2,5$; $MgO_x$, wobei $0<x<1$; $Sc_2O_z$, wobei $0<z<3$; $TiO_y$, wobei $0<y<2$; $ZrO_y$, wobei $0<y<2$; $V_2O_z$, wobei $0<z<3$; $WO_y$, wobei $0<y<2$; $MnO_y$, wobei $0<y<2$; $Fe_2O_z$, wobei $0<z<3$; $Co_3O_w$, wobei $0<w<4$; $PdO_x$, wobei $0<x<1$; $CuO_x$, wobei $0<x<1$; $AgO_x$, wobei $0<x<1$; $ZnO_x$, wobei $0<x<1$; $Sb_2O_z$, wobei $0<z<3$ und $SeO_y$, wobei $0<y<2$.

7. Verbundkathodenaktivmaterial nach einem der Ansprüche 1 bis 6, wobei die Hülle eine Dicke in einem Bereich von etwa 1 nm bis etwa 5 µm aufweist.

8. Verbundkathodenaktivmaterial nach einem der Ansprüche 1 bis 7, wobei die Hülle umfasst:

Lithiumnitrat; und

mindestens eines, ausgewählt aus: dem leitfähigen Verbundstoff auf Kohlenstoffbasis, umfassend das erste Metalloxid und das Material auf Kohlenstoffbasis, und einem Mahlprodukt des leitfähigen Verbundstoffs auf Kohlenstoffbasis, und

eine Menge von mindestens einem, ausgewählt aus dem leitfähigen Verbundstoff auf Kohlenstoffbasis und dem Mahlprodukt des leitfähigen Verbundstoffs auf Kohlenstoffbasis, 3 Gew.-% oder weniger, bezogen auf das Gesamtgewicht des Verbundkathodenaktivmaterials, beträgt.

9. Verbundkathodenaktivmaterial nach einem der Ansprüche 1 bis 8, wobei

(i) das Material auf Kohlenstoffbasis eine verzweigte Struktur aufweist und das erste Metalloxid in der verzweigten Struktur verteilt ist, und

die verzweigte Struktur eine Vielzahl von Materialpartikeln auf Kohlenstoffbasis umfasst, die miteinander in Kontakt stehen; und/oder

(ii) das Material auf Kohlenstoffbasis mindestens eine Struktur aufweist, ausgewählt aus einer kugelförmigen Struktur, einer spiralförmigen Struktur, in der eine Vielzahl der kugelförmigen Strukturen miteinander verbunden sind, und einer Clusterstruktur, in der eine Vielzahl der kugelförmigen Strukturen aggregiert ist, und das erste Metalloxid in der kugelförmigen Struktur verteilt ist und eine Größe der kugelförmigen Struktur in einem Bereich von etwa 50 nm bis etwa 300 nm liegt, eine Größe der spiralförmigen Struktur in einem Bereich von etwa 500 nm bis etwa 100 µm liegt und eine Größe der Clusterstruktur in einem Bereich von etwa 0,5 mm bis etwa 10 mm liegt,

wobei der leitfähige Verbundstoff auf Kohlenstoffbasis mindestens eine zerknitterte facettierte Kugelstruktur oder eine planare Struktur aufweist und das erste Metalloxid innerhalb oder auf einer Oberfläche der mindestens einen zerknitterten facettierten Kugelstruktur und der planaren Struktur verteilt ist, und/oder wobei sich das Material auf Kohlenstoffbasis vom ersten Metalloxid um einen Abstand von weniger als oder gleich 10 nm erstreckt und mindestens 1 bis 20 Materialschichten auf Kohlenstoffbasis umfasst und eine Gesamtdicke des Materials auf Kohlenstoffbasis in einem Bereich von etwa 0,6 nm bis etwa 12 nm liegt.

10. Verbundkathodenaktivmaterial nach einem der Ansprüche 1 bis 9, wobei das Lithium-Übergangsmetalloxid aus Verbindungen ausgewählt ist, dargestellt durch die Formeln 1 bis 6:

Formel 1 $\qquad Li_aNi_xCo_yM_zO_{2-b}A_b$

in Formel 1

$1,0 \le a \le 1,2$, $0 \le b \le 0,2$, $0,8 \le x < 1$, $0 < y \le 0,3$, $0 < z \le 0,3$ und $x+y+z=1$,
M Mangan, Kobalt, Niob, Vanadium, Magnesium, Gallium, Silizium, Wolfram, Molybdän, Eisen, Chrom, Kupfer, Zink, Titan, Aluminium oder eine Kombination davon ist und
A Fluor, Schwefel, Chlor, Brom oder eine Kombination davon ist,

$$\text{Formel 2} \qquad \text{LiNi}_x\text{Co}_y\text{Mn}_z\text{O}_2$$

$$\text{Formel 3} \qquad \text{LiNi}_x\text{Co}_y\text{Al}_z\text{O}_2$$

wobei in den Formeln 2 und 3 $0{,}8 \leq x \leq 0{,}95$, $0 < y \leq 0{,}2$, $0 < z \leq 0{,}2$ und $x+y+z=1$ ist,

$$\text{Formel 4} \qquad \text{LiNi}_x\text{Co}_y\text{Mn}_v\text{Al}_w\text{O}_2$$

wobei in Formel 4 $0{,}8 \leq x \leq 0{,}95$, $0 < y \leq 0{,}2$, $0 < v \leq 0{,}2$, $0 < w \leq 0{,}2$ und
$x+y+v+w=1$ ist, und

$$\text{Formel 5} \qquad \text{Li}_a\text{Co}_x\text{M}_y\text{O}_{2-b}\text{A}_b$$

in Formel 5

$1{,}0 \leq a \leq 1{,}2$, $0 \leq b \leq 0{,}2$, $0{,}9 \leq x \leq 1$, $0 \leq y \leq 0{,}1$ und $x+y=1$
M Mangan, Niob, Vanadium, Magnesium, Gallium, Silizium, Wolfram, Molybdän, Eisen, Chrom, Kupfer, Zink, Titan, Aluminium oder eine Kombination davon ist und
A Fluor, Schwefel, Chlor, Brom oder eine Kombination davon ist,

$$\text{Formel 6} \qquad \text{LiCoO}_2.$$

11. Kathode (3), umfassend das Verbundkathodenaktivmaterial nach einem der Ansprüche 1 bis 10.

12. Lithiumbatterie (1), umfassend:

die Kathode (3) nach Anspruch 11;
eine Anode (2); und
einen Elektrolyten zwischen der Kathode (3) und der Anode (2).

13. Lithiumbatterie (1) nach Anspruch 12, wobei

die Kathode (3) einen Kathodenstromkollektor umfasst, die Anode (2) einen Anodenstromkollektor umfasst und mindestens einer von dem Kathodenstromkollektor oder dem Anodenstromkollektor einen Basisfilm und eine Metallschicht auf einer oder beiden Oberflächen des Basisfilms umfasst,
wobei der Basisfilm ein Polymer umfasst, wobei das Polymer Polyethylenterephthalat, Polyethylen, Polypropylen, Polybutylenterephthalat, Polyimid oder eine Kombination davon umfasst, und
die Metallschicht Indium, Kupfer, Magnesium, Edelstahl, Titan, Eisen, Kobalt, Nickel, Zink, Aluminium, Germanium, Lithium oder eine Legierung davon umfasst; und/oder
wobei der Elektrolyt einen flüssigen Elektrolyten, einen festen Elektrolyten, einen Gelelektrolyten oder eine Kombination davon umfasst;
optional, wobei der Elektrolyt den festen Elektrolyten und/oder den Gelelektrolyten umfasst, und
wobei der feste Elektrolyt ein fester Elektrolyt auf Oxidbasis, ein fester Elektrolyt auf Sulfidbasis, ein polymerer fester Elektrolyt oder eine Kombination davon ist und der Gelelektrolyt einen polymeren Gelelektrolyten umfasst.

14. Verfahren zur Herstellung eines Verbundkathodenaktivmaterials, wobei das Verfahren umfasst:

Aufbringen eines Lithium-Übergangsmetalloxids;
Aufbringen eines Verbundstoffs;
Aufbringen von Lithiumnitrat; und
mechanisches Vermahlen des Lithium-Übergangsmetalloxids, des Verbundstoffs und des Lithiumnitrats,
wobei der Verbundstoff umfasst: ein erstes Metalloxid, dargestellt durch $\text{M}_a\text{O}_b$, wobei $0 < a \leq 3$, $0 < b < 4$ und wenn a 1, 2 oder 3 ist, b keine ganze Zahl ist; und ein Material auf Kohlenstoffbasis, und
das erste Metalloxid in einer Matrix aus dem Material auf Kohlenstoffbasis vorliegt und M mindestens ein Metall, ausgewählt aus den Gruppen 2 bis 13, 15 und 16 des Periodensystems der Elemente, ist;
optional, wobei das Aufbringen des Verbundstoffs umfasst:

Zuführen eines Reaktionsgases, das ein Kohlenstoffquellengas einschließt, zu einem zweiten Metalloxid, dargestellt durch $M_aO_c$, wobei $0<a\leq3$, $0<c\leq4$ und, wenn a 1, 2 oder 3 ist, c eine ganze Zahl ist, und Durchführen einer Wärmebehandlung von dem Reaktionsgas, um einen undotierten Verbundstoff bereitzustellen; und
Herstellen des Verbundstoffs durch Inkontaktbringen des undotierten Verbundstoffs mit Lithiumnitrat, wobei M mindestens ein Metall, ausgewählt aus den Gruppen 2 bis 13, 15 und 16 des Periodensystems der Elemente, ist, wobei ein Metall im ersten Metalloxid mindestens ein Metall umfasst, ausgewählt aus Al, Nb, Mg, Sc, Ti, Zr, V, W, Mn, Fe, Co, Pd, Cu, Ag, Zn, Sb und Se, und
wobei das Material auf Kohlenstoffbasis Graphen ist.

## Revendications

1. Matériau actif de cathode composite comprenant :

un cœur comprenant un oxyde de métal de transition de lithium ; et
une coque conformée à une surface du cœur,
dans lequel,
la coque comprend :

du nitrate de lithium, $LiNO_3$ ; et
un composite à base de carbone conducteur,
le composite à base de carbone conducteur comprend :

un premier oxyde de métal représenté par $M_aO_b$, où $0 < a \leq 3$ et $0 < b < 4$, et si a vaut 1, 2, ou 3, b n'est pas un entier ; et
un matériau à base de carbone,
le premier oxyde de métal est dans une matrice du matériau à base de carbone,
M est au moins un métal sélectionné parmi les groupes 2 à 13, 15, et 16 du tableau périodique des éléments, dans lequel un métal dans le premier oxyde de métal comprend au moins un métal sélectionné parmi Al, Nb, Mg, Sc, Ti, Zr, V, W, Mn, Fe, Co, Pd, Cu, Ag, Zn, Sb, et Se, et
dans lequel le matériau à base de carbone est le graphène.

2. Matériau actif de cathode composite selon la revendication 1, dans lequel une quantité de nitrate de lithium dans la coque est de 3 % en poids ou moins sur la base de 100 % en poids du poids total du matériau actif de cathode composite.

3. Matériau actif de cathode composite selon la revendication 1 ou la revendication 2, dans lequel la coque comprend en outre au moins un élément sélectionné parmi $Li_3N$, $LiNO_2$, et $LiN_xO_y$, où $0,5 \leq x \leq 1$ et $2 \leq y \leq 3,5$.

4. Matériau actif de cathode composite selon l'une quelconque des revendications 1 à 3, dans lequel,

une quantité d'un premier métal dans le premier oxyde de métal dans la coque est d'environ 1 % at à environ 10 % at, sur la base du nombre total d'atomes dans la coque, et/ou
une quantité d'oxygène dans la coque est d'environ 1 % at à environ 20 % at, sur la base du nombre total d'atomes dans la coque, et/ou
une quantité d'azote dans la coque est de 1 % at à environ 12 % at, sur la base du nombre total d'atomes dans la coque.

5. Matériau actif de cathode composite selon l'une quelconque des revendications 1 à 4, dans lequel une quantité de carbone dans la coque est d'environ 65 % at à environ 99 % at, sur la base du nombre total d'atomes dans la coque.

6. Matériau actif de cathode composite selon l'une quelconque des revendications 1 à 5, dans lequel le premier oxyde de métal est sélectionné parmi : $Al_2O_z$, où $0 < z < 3$ ; $NbO_x$, où $0 < x < 2,5$ ; $MgO_x$, où $0 < x < 1$ ; $Sc_2O_z$, où $0 < z < 3$ ; $TiO_y$, où $0 < y < 2$ ; $ZrO_y$, où $0 < y < 2$ ; $V_2O_z$, où $0 < z < 3$ ; $WO_y$, où $0 < y < 2$ ; $MnO_y$, où $0 < y < 2$ ; $Fe_2O_z$, où $0 < z < 3$ ; $Co_3O_w$, où $0 < w$

< 4 ; $PdO_x$, où $0 < x < 1$ ; $CuO_x$, où $0 < x < 1$ ; $AgO_x$, où $0 < x < 1$ ; $ZnO_x$, où $0 < x < 1$ ; $Sb_2O_z$, où $0 < z < 3$ ; et $SeO_y$, où $0 < y < 2$.

7. Matériau actif de cathode composite selon l'une quelconque des revendications 1 à 6, dans lequel la coque présente une épaisseur se situant dans une plage allant d'environ 1 nm à environ 5 $\mu$m.

8. Matériau actif de cathode composite selon l'une quelconque des revendications 1 à 7, dans lequel, la coque comprend :

   du nitrate de lithium ; et
   au moins un élément sélectionné parmi : le composite à base de carbone conducteur comprenant le premier oxyde de métal et le matériau à base de carbone, et un produit de broyage du composite à base de carbone conducteur, et
   une quantité de l'au moins un élément sélectionné parmi le composite à base de carbone conducteur et le produit de broyage du composite à base de carbone conducteur est de 3 % en poids ou moins sur la base du poids total du matériau actif de cathode composite.

9. Matériau actif de cathode composite selon l'une quelconque des revendications 1 à 8, dans lequel,

   (i) le matériau à base de carbone présente une structure ramifiée, et le premier oxyde de métal est réparti dans la structure ramifiée, et
   la structure ramifiée comprend une pluralité de particules de matériau à base de carbone en contact les unes avec les autres ; et/ou
   (ii) le matériau à base de carbone présente au moins une structure sélectionnée parmi une structure sphérique, une structure en spirale dans laquelle une pluralité des structures sphériques sont liées les unes aux autres, et une structure en amas dans laquelle une pluralité des structures sphériques sont regroupées, et le premier oxyde de métal est réparti dans la structure sphérique, et une taille de la structure sphérique se situe dans une plage allant d'environ 50 nm à environ 300 nm, une taille de la structure en spirale se situe dans une plage allant d'environ 500 nm à environ 100 $\mu$m, et une taille de la structure en amas se situe dans une plage allant d'environ 0,5 mm à environ 10 mm,

   dans lequel le composite à base de carbone conducteur présente au moins une structure parmi une structure de boule à facettes froissée et une structure plane, et le premier oxyde de métal est réparti à l'intérieur de ou sur une surface de l'au moins une structure parmi la structure de boule à facettes froissée et la structure plane, et/ou
   dans lequel le matériau à base de carbone s'étend depuis le premier oxyde de métal d'une distance de moins de ou égale à 10 nm, et comprend au moins 1 à 20 couches de matériau à base de carbone, et une épaisseur totale du matériau à base de carbone se situe dans une plage allant d'environ 0,6 nm à environ 12 nm.

10. Matériau actif de cathode composite selon l'une quelconque des revendications 1 à 9, dans lequel l'oxyde de métal de transition de lithium est sélectionné parmi des composés représentés par les formules 1 à 6 :

   Formule 1          $Li_aNi_xCo_yM_zO_{2-b}A_b$

dans la formule 1,

   $1,0 \le a \le 1,2$, $0 \le b \le 0,2$, $0,8 \le x < 1,0 < y \le 0,3$, $0 < z \le 0,3$, et $x + y + z = 1$,
   M est e manganèse, le cobalt, le niobium, le vanadium, le magnésium, le gallium, le silicium, le tungstène, le molybdène, le fer, le chrome, le cuivre, le zinc, le titane, l'aluminium, ou une combinaison de ceux-ci, et
   A est le fluor, le soufre, le chlore, le brome, ou une combinaison de ceux-ci,

   Formule 2          $LiNi_xCo_yMn_zO_2$

   Formule 3          $LiNi_xCo_yAl_zO_2$

dans lesquelles, dans les formules 2 et 3, $0,8 \le x \le 0,95$, $0 < y \le 0,2$, $0 < z \le 0,2$, et
x + y + z = 1,

Formule 4        $LiNi_xCo_yMn_vAl_wO_2$

dans laquelle, dans la formule 4, $0,8 \leq x \leq 0,95$, $0 < y \leq 0,2$, $0 < v \leq 0,2$, $0 < w \leq 0,2$, et $x + y + v + w = 1$, et

Formule 5        $Li_aCo_xM_yO_{2-b}A_b$

dans la formule 5,

> $1,0 \leq a \leq 1,2$, $0 \leq b \leq 0,2$, $0,9 \leq x \leq 1$, $0 \leq y \leq 0,1$, et $x + y = 1$,
> M est le manganèse, le niobium, le vanadium, le magnésium, le gallium, le silicium, le tungstène, le molybdène, le fer, le chrome, le cuivre, le zinc, le titane, l'aluminium, ou une combinaison de ceux-ci, et
> A est le fluor, le soufre, le chlore, le brome, ou une combinaison de ceux-ci,

Formule 6        $LiCoO_2$.

**11.** Cathode (3) comprenant le matériau actif de cathode composite selon l'une quelconque des revendications 1 à 10.

**12.** Batterie au lithium (1) comprenant :

> la cathode (3) selon la revendication 11 ;
> une anode (2) ; et
> un électrolyte entre la cathode (3) et l'anode (2).

**13.** Batterie au lithium (1) selon la revendication 12, dans laquelle

> la cathode (3) comprend un collecteur de courant de cathode, l'anode (2) comprend un collecteur de courant d'anode, et au moins un collecteur parmi le collecteur de courant de cathode et le collecteur de courant d'anode comprend un film de base et une couche de métal sur une ou les deux surfaces du film de base,
> le film de base comprend un polymère, le polymère comprenant le poly(téréphtalate d'éthylène), le polyéthylène, le polypropylène, poly(téréphtalate de butylène), le polyimide, ou une combinaison de ceux-ci, et
> la couche de métal comprend l'indium, le cuivre, le magnésium, l'acier inoxydable, le titane, le fer, le cobalt, le nickel, le zinc, l'aluminium, le germanium, le lithium, ou un alliage de ceux-ci ; et/ou
> dans laquelle l'électrolyte comprend un électrolyte liquide, un électrolyte solide, un électrolyte en gel, ou une combinaison de ceux-ci ;
> facultativement dans laquelle l'électrolyte comprend l'électrolyte solide et/ou l'électrolyte en gel, et
> dans laquelle l'électrolyte solide est un électrolyte solide à base d'oxyde, un électrolyte solide à base de sulfure, un électrolyte solide de polymère, ou une combinaison de ceux-ci, et l'électrolyte en gel comprend un électrolyte en gel de polymère.

**14.** Procédé de préparation d'un matériau actif de cathode composite, le procédé comprenant le fait :

> d'appliquer un oxyde de métal de transition de lithium ;
> d'appliquer un composite ;
> d'appliquer du nitrate de lithium ; et
> de broyer mécaniquement l'oxyde de métal de transition de lithium, le composite, et le nitrate de lithium,
> dans lequel le composite comprend : un premier oxyde de métal représenté par $M_aO_b$, où $0 < a \leq 3$, $0 < b < 4$, et si a vaut 1, 2, ou 3, b n'est pas un entier ; et un matériau à base de carbone, et
> le premier oxyde de métal est dans une matrice du matériau à base de carbone, et M est au moins un métal sélectionné parmi les groupes 2 à 13, 15, et 16 du tableau périodique des éléments ;
> facultativement dans lequel le fait d'appliquer le composite comprend le fait :
>
> > de délivrer du gaz de réaction incluant un gaz source de carbone à un deuxième oxyde de métal représenté par $M_aO_c$, où $0 < a \leq 3$, $0 < c \leq 4$, et si a vaut 1, 2, ou 3, c est un entier, et de réaliser un traitement thermique sur le gaz de réaction pour fournir un composite non dopé ; et
> > de préparer le composite en mettant en contact le composite non dopé avec du nitrate de lithium,
> > dans lequel M est au moins un métal sélectionné parmi les groupes 2 à 13, 15, et 16 du tableau période des éléments, dans lequel un métal dans le premier oxyde de métal comprend au moins un métal sélectionné parmi Al, Nb, Mg, Sc, Ti, Zr, V, W, Mn, Fe, Co, Pd, Cu, Ag, Zn, Sb, et Se, et

dans lequel le matériau à base de carbone est le graphène.

FIG. 1

# FIG. 2

# FIG. 3

# FIG. 4

FIG. 5

# FIG. 6

# FIG. 7

# FIG. 8

# FIG. 9

**EP 4 435 901 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4131507 A1
- US 2022293921 A1
- KR 20220127002 A